(19)

Europäisches
Patentamt
European
Patent Office
Office européen
des brevets

(11) **EP 2 104 164 A1**

(12) **EUROPEAN PATENT APPLICATION**
published in accordance with Art. 153(4) EPC

(43) Date of publication:
    **23.09.2009 Bulletin 2009/39**

(51) Int Cl.:
    **H01M 4/58** (2006.01)    **C01B 31/02** (2006.01)
    **H01G 9/058** (2006.01)

(21) Application number: **07860378.4**

(22) Date of filing: **27.12.2007**

(86) International application number:
    **PCT/JP2007/075156**

(87) International publication number:
    **WO 2008/081883 (10.07.2008 Gazette 2008/28)**

(84) Designated Contracting States:
    **AT BE BG CH CY CZ DE DK EE ES FI FR GB GR
    HU IE IS IT LI LT LU LV MC MT NL PL PT RO SE
    SI SK TR**

(30) Priority: **28.12.2006 JP 2006356630**

(71) Applicants:
    • **Dow Corning Toray Co., Ltd.**
      **Tokyo 100-0005 (JP)**
    • **Tokyo Metropolitan University**
      **Tokyo 163-8001 (JP)**

(72) Inventors:
    • **FUKUI, Hiroshi**
      **Ichihara-shi**
      **Chiba 299-0108 (JP)**

    • **OHSUKA, Hisashi**
      **Ichihara-shi**
      **Chiba 299-0108 (JP)**
    • **HINO, Takakazu**
      **Ichihara-shi**
      **Chiba 299-0108 (JP)**
    • **KANAMURA, Kiyoshi**
      **Hachioji-shi**
      **Tokyo 192-0364 (JP)**

(74) Representative: **Bailey, Lindsey**
    **Elkington and Fife LLP**
    **Prospect House**
    **8 Pembroke Road**
    **Sevenoaks, Kent TN13 1XR (GB)**

(54) **POROUS SILICON-CONTAINING CARBON-BASED COMPOSITE MATERIAL, ELECTRODE COMPOSED OF THE SAME AND BATTERY**

(57)    The present invention relates to a porous silicon-containing carbon-based composite material produced by carbonizing both (1) a silicon metal or a silicon-containing compound and (2) an organic compound containing no silicon atoms and having a softening point or a melting point, in an inert gas or in a vacuum at a temperature ranging from 300 to 1,500°C. The porous silicon-containing carbon-based composite material of the present invention can be used as an electrode of a battery. Thereby, a battery which has an increased reversible capacity and stable charge and discharge cycle characteristics, and has a reduced loss of potential at the time of discharging lithium can be produced with a simple production process.

FIG. 1

**Description**

TECHNOLOGICAL FIELD

The present application claims priority on the basis of Japanese Patent Application No. 2006-356630, filed in Japan on December 28, 2006, which is hereby incorporated by reference.

The present invention relates to a porous silicon-containing carbon-based composite material, an electrode comprising the aforementioned composite material, and a battery comprising the aforementioned electrode.

BACKGROUND ART

A so-called lithium secondary battery in which lithium and a metal chalcogen and/or a metal oxide are respectively used as a negative electrode and a positive electrode, and a solution obtained by dissolving various salts in an aprotic organic solvent is used as an electrolyte attracts attention as one type of high-energy density secondary batteries. Studies therefor have been actively carried out.

However, in a conventional lithium secondary battery, lithium as a negative electrode is mainly used alone in the form of a foil. For this reason, there is a problem in that as charge and discharge cycles are repeated, lithium in the form of a branch (dendrite) is deposited, and the deposition causes short circuiting in the positive and negative electrodes. For this reason, the conventional lithium secondary battery has a disadvantage in that the charge and discharge cycle life is reduced.

In order to solve the aforementioned problem, studies for carrying lithium on various carbon materials have been actively carried out.

In the aforementioned carbon material, it is known that a baked product produced by baking various carbon sources at a temperature around 1,000°C in an inert gas or in a vacuum can provide high charge and discharge capacity still exceeding a theoretical capacity of graphite (372 mAh/g).

For example, in J. Electrochem. Soc., 142, 1041 (1995), it is reported that a carbon material obtained by baking mesophase carbon microbeads (MCMB) under an argon atmosphere is used as a negative electrode, and thereby, a reversible capacity of 750 mAh/g can be obtained. In addition, in J. Electrochem. Soc., 143, 3482 (1996), it is reported that a carbon material obtained by baking a phenol resin under an argon atmosphere is used as a negative electrode, and thereby, a reversible capacity of 560 mAh/g can be obtained.

On the other hand, recently, a study for carrying lithium on a material obtained by milling and mixing a silicon metal and a carbon material such as graphite has been carried out.

For example, in a material described in Japanese Unexamined Patent Application, First Publication No. 2002-216751, silicon and carbon are dispersed in the form of microparticles. For this reason, conductive properties are improved, and the inserting lithium ions to silicon for alloying are uniformized. As a result, the rate of charging and discharging is increased. In addition, the aforementioned material has suitable cavities, and thereby, volume expansivity occurring at the time of alloying silicon and lithium can be absorbed. For this reason, the amount of carbon required to control expansivity involved in accordance with alloying can be reduced, and thereby, charge capacity can be increased.

In addition, Japanese Unexamined Patent Application, First Publication No. 2004-146104 describes a composite material obtained by mixing silicon powder, vapor grown carbon fiber (VGCF) and graphite. Even if expansion and retraction repeat in accordance with process of charge and discharge cycles, contact between particles can be maintained, an increase of the inner resistance of a negative electrode is controlled, and the initial capacity of a battery can be maintained without disintegration of a conductive network.

On the other hand, it is also reported that a silicon-containing carbon material obtained by thermally decomposing a silicon polymer is used as a negative electrode.

For example, in Japanese Unexamined Patent Application, First Publication No. H10-97853 and Solid State Ionics, 122, 71 (1999), it is described that by means of using a polysilane and a coal-tar pitch as precursors, an electrode usable for the preparation of a battery having a large capacity, reduced non-reversible capacity, high density and good safe behavior can be prepared.

In addition, in Japanese Unexamined Patent Application, First Publication No. H10-74506, Japanese Unexamined Patent Application, First Publication No. 2004-273377, and J. Electrochem. Soc., 144, 2410 (1997), it is described that an electrode for use in a lithium ion battery is produced by thermally decomposing a siloxane polymer and subsequently inserting a lithium ion, and thereby, a battery having a large capacity, reduced non-reversible capacity, high density and good safe behavior can be prepared.

[Patent Document 1] Japanese Unexamined Patent Application, First Publication No. 2002-216751
[Patent Document 2] Japanese Unexamined Patent Application, First Publication No. 2004-146104
[Patent Document 3] Japanese Unexamined Patent Application, First Publication No. H10-97853

[Patent Document 4] Japanese Unexamined PatentApplication, First Publication No. H10-74506

[Patent Document 5] Japanese Unexamined Patent Application, First Publication No. 2004-273377

[Non-patent Document 1] J. Electrochem. Soc., 142, 1041 (1995)

[Non-patent Document 2] J. Electrochem. Soc., 143, 3482 (1996)

[Non-patent Document 3] Solid State Ionics, 122, 71 (1999)

[Non-patent Document 4] J. Electrochem. Soc., 144, 2410 (1997)

DISCLOSURE OF THE INVENTION

Problems to be Solved by the Invention

However, the carbon materials described in the aforementioned Non-patent Documents 1 and 2 have many disadvantages on practical use, such as a reduced initial charge and discharge efficiency, a large loss in potential at the time of discharging lithium from the carbon material, poor charge and discharge cycle characteristics, and the like.

In addition, the composite materials described in the aforementioned Patent Documents 1 and 2 can improve the charge and discharge capacity, but have a disadvantage in that it is necessary to use an expensive process such as a chemical vapor deposition method (CVD method) using benzene as a carbon source, and the like.

In addition, the carbon materials obtained in accordance with methods described in Patent Documents 3, 4 and 5, and Non-patent Documents 3 and 4 have insufficient performance on practical use in view of charge and discharge cycle characteristics and the like.

The present invention was performed under the aforementioned circumstances in the prior art. An objective of the present invention is to obtain a silicon-containing carbon-based composite material which has an increased reversible capacity and a stable charge and discharge cycle characteristic, has a reduced loss in potential at the time of discharging lithium, and can be produced by a simple preparation process, and in particular, is suitable as an electrode for a lithium ion secondary battery, as well as to obtain a battery using the aforementioned composite material as an electrode.

Means for Solving the Problems

The aforementioned objective can be achieved by a porous silicon-containing carbon-based composite material obtainable by carbonizing both (1) a silicon metal or a silicon-containing compound and (2) an organic compound containing no silicon and having a softening point or a melting point, in an inert gas or in a vacuum at a temperature ranging from 300 to 1,500°C.

The softening point or melting point of the aforementioned component (2) is preferably not more than 400°C.

The aforementioned porous silicon-containing carbon-based composite material is preferably a particulate. The maximum particle size thereof is preferably not more than 100 $\mu$m, the BET specific surface area thereof preferably ranges from 0.5 to 500 m$^2$/ g, and the pore volume preferably ranges from $1.0 \times 10^{-5}$ to 1 cm$^3$/g. The aforementioned composite material is preferably a material in which the adsorption isotherm of nitrogen is classified into TYPE I defined in IUPAC.

The aforementioned composite material can be preferably used as a material for forming an electrode, and is, in particular, preferably used as an electrode for a battery. As the aforementioned battery, a lithium ion secondary battery is particularly preferable.

EFFECTS OF THE INVENTION

The porous silicon-containing carbon-based composite material of the present invention has a high reversible capacity and stable charge and discharge cycle characteristics, and has a reduced loss of potential at the time of discharging lithium, and can be produced by a simple preparation method.

Therefore, the porous silicon-containing carbon-based composite material of the present invention is preferably used as a material for forming an electrode, and is, in particular, preferably used as an electrode for a battery. In particular, the composite material can be preferably used as an electrode for a lithium ion secondary battery.

BRIEF DESCRIPTION OF DRAWINGS

[Fig. 1] A view showing one example of a lithium ion secondary battery of the present invention.

[Fig. 2] A view showing another example of a lithium ion secondary battery of the present invention.

[Fig. 3] An X-ray diffraction pattern of powder of a silicon-containing carbon-based composite material of Example 1.

[Fig. 4] A scanning electron micrograph of powder of a silicon-containing carbon-based composite material of Example 1.

[Fig. 5] A charge and discharge curve of a battery of Example 1.

[Fig. 6] An X-ray diffraction pattern of a silicon-containing carbon-based composite material of Example 2.

[Fig. 7] A scanning electron micrograph of a silicon-containing carbon-based composite material of Example 2.

[Fig. 8] A charge and discharge curve of a battery of Example 2.

[Fig. 9] An X-ray diffraction pattern of a silicon-containing carbon-based composite material of Example 3.

[Fig. 10] A small-angle X-ray scattering profile of a silicon-containing carbon-based composite material of Example 3.

[Fig. 11] A pore size distribution of a silicon-containing carbon-based composite material of Example 3.

[Fig. 12] A charge and discharge curve of a battery of Example 3.

[Fig. 13] A charge and discharge curve of a battery of Example 4.

[Fig. 14] An X-ray diffraction pattern of a silicon-containing carbon-based composite material of Example 5.

[Fig. 15] A charge and discharge curve of a battery of Example 5.

[Fig. 16] A cycle characteristic of a battery of Example 5.

[Fig. 17] A charge and discharge curve of a battery of Example 6.

[Fig. 18] An X-ray diffraction pattern of a silicon-containing carbon-based composite material of Example 7.

[Fig. 19] A charge and discharge curve of a battery of Example 7.

[Fig. 20] A cycle characteristic of a battery of Example 7.

[Fig. 21] An X-ray diffraction pattern of a silicon-containing carbon-based composite material of Example 8.

[Fig. 22] A charge and discharge curve of a battery of Example 8.

[Fig. 23] An X-ray diffraction pattern of a silicon-containing carbon-based composite material of Example 9.

[Fig. 24] A charge and discharge curve of a battery of Example 9.

[Fig. 25] An X-ray diffraction pattern of a silicon-containing carbon-based composite material of Example 10.

[Fig. 26] A charge and discharge curve of a battery of Example 10.

[Fig. 27] A cycle characteristic of a battery of Example 10.

[Fig. 28] An X-ray diffraction pattern of a silicon-containing carbon-based composite material of Example 11.

[Fig. 29] A charge and discharge curve of a battery of Example 11.

[Fig. 30] A cycle characteristic of a battery of Example 11.

[Fig. 31] A charge and discharge curve of a battery of Example 12.

[Fig. 32] An X-ray diffraction pattern of a silicon-containing carbon-based composite material of Example 13.

[Fig. 33] A charge and discharge curve of a battery of Example 13.

[Fig. 34] An X-ray diffraction pattern of a silicon-containing carbon-based composite material of Example 14.

[Fig. 35] A charge and discharge curve of a battery of Example 14.

[Fig. 36] An X-ray diffraction pattern of a silicon-containing carbon-based composite material of Example 15.

[Fig. 37] A charge and discharge curve of a battery of Example 15.

[Fig. 38] An X-ray diffraction pattern of a silicon-containing carbon-based composite material of Example 16.

[Fig. 39] A charge and discharge curve of a battery of Example 16.

[Fig. 40] A cycle characteristic of a battery of Example 16.

[Fig. 41] An X-ray diffraction pattern of a silicon-containing carbon-based composite material of Example 17.

[Fig. 42] A small-angle X-ray scattering profile of a silicon-containing carbon-based composite material of Example 17.

[Fig. 43] A pore size distribution of a silicon-containing carbon-based composite material of Example 17.

[Fig. 44] A charge and discharge curve of a battery of Example 17.

[Fig. 45] A cycle characteristic of a battery of Example 17.

[Fig. 46] An X-ray diffraction pattern of a silicon-containing carbon-based composite material of Example 18.

[Fig. 47] A charge and discharge curve of a battery of Example 18.

[Fig. 48] A charge and discharge curve of a battery of Example 19.

[Fig. 49] A charge and discharge curve of a battery of Example 20.

[Fig. 50] A charge and discharge curve of a battery of Example 21.

[Fig. 51] A charge and discharge curve of a battery of Example 22.

DESCRIPTION OF SYMBOLS

1: molecular sieve, 2: positive electrode, 3: negative electrode, 4: separator, 5: polypropylene plate, 6: polypropylene filler, 7: electrolyte, 8: collector, 9: case, 10: insulating packing, 11: positive electrode, 12: separator, 13: negative electrode, 14: collector, 15: closing board

## BEST MODES FOR CARRYING OUT THE INVENTION

### (1) Silicon metal or silicon-containing compound

The silicon metals or silicon-containing compounds used in the present invention are not particularly limited. The silicon metals may be in a monocrystalline, polycrystalline or amorphous silicon, or the like. In addition, the silicon-containing compounds may be inorgano silicon compounds or organo silicon compounds. As examples of inorgano silicon compounds, mention may be made of oxides such as silicon oxide, silicon dioxide and the like; nitrides such as silicon nitride and the like; carbides such as silicon carbide and the like; as well as, oxynitrides, oxycarbides, silicon alloys, metal silicides, and silicates.

In addition, as examples of organo silicon compounds, mention may be made of organo silicon compounds having a low molecular weight such as silanes, silazanes, siloxanes and the like, as well as, organo silicon polymers or oligomers such as polysilanes, polysilazanes, polysiloxanes and the like. In view of handling properties, organo silicon polymers or oligomers are preferably used as the organo silicon compounds. In particular, organo silicon compounds having properties of releasing volatile substances by heating (hereinafter, referred to as "thermal decomposability" in the present specification) are preferable. As the thermally decomposable organo silicon compounds, those having a reduced char yield in a carbonization step described below are preferable. The organo silicon compounds may be used alone or in combination with two or more types thereof.

As the polysilanes, for example, one represented by the following average unit formula (I):

$$(R^1R^2R^3Si)_a(R^3R^4Si)_b(R^5Si)_c(Si)_d \qquad (I)$$

wherein

$R^1$ to $R^5$ independently represent a hydrogen atom, a substituted or non-substituted monovalent hydrocarbon group having 1 to 20 carbon atoms, an alkoxy group, a halogen atom, or an acyl group; and

a, b, c and d represent 0 or a positive number, with the proviso that $a + b + c + d = 1$, can be used.

The polysilane represented by the aforementioned average unit formula (I) is composed of at least one unit selected from the structural units represented by $(R^1R^2R^3Si)$, $(R^3R^4Si)$, $(R^5Si)$ and $(Si)$. As examples thereof, mention may be made of, for example, a straight-chain polysilane formed from $(R^1R^2R^3Si)$ and $(R^3R^4Si)$ units; a cyclic polysilane formed from $(R^3R^4Si)$ units; a branched chain polysilane (polysilyn) formed from $(R^5Si)$ or $(Si)$ units; a polysilane formed from $(R^1R^2R^3Si)$ and $(R^5Si)$ units; a polysilane formed from $(R^1R^2R^3Si)$ and $(Si)$ units; a polysilane formed from $(R^5Si)$ and $(Si)$ units; a polysilane formed from $(R^3R^4Si)$ and $(R^5Si)$ units; a polysilane formed from $(R^3R^4Si)$ and $(Si)$ units; a polysilane formed from $(R^1R^2R^3Si)$, $(R^3R^4Si)$ and $(R^5Si)$ units; a polysilane formed from $(R^1R^2R^3Si)$, $(R^3R^4Si)$ and $(Si)$ units; a polysilane formed from $(R^1R^2R^3Si)$, $(R^5Si)$ and $(Si)$ units; a polysilane formed from $(R^3R^4Si)$, $(R^5Si)$ and $(Si)$ units; a polysilane formed from $(R^1R^2R^3Si)$, $(R^3R^4Si)$, $(R^5Si)$ and $(Si)$ units; and the like. The preferable number of repeated units represented by $(R^1R^2R^3Si)$, $(R^3R^4Si)$, $(R^5Si)$ and $(Si)$ independently ranges from 2 to 10,000, more preferably ranges from 3 to 1,000 and more preferably ranges from 3 to 500.

As the aforementioned hydrocarbon group, a monovalent hydrocarbon group selected from the group consisting of an alkyl group, an alkenyl group, an aralkyl group and an aryl group is preferable.

As the alkyl group, a $C_1$-$C_{12}$ alkyl group is preferable, and a $C_1$-$C_6$ alkyl group is more preferable. The alkyl group is preferably one of a straight chain or branched chain alkyl group, a cycloalkyl group, and a cycloalkylene group (an alkyl group formed from a combination of a straight chain or branched chain alkylene group which is preferably a $C_1$-$C_6$ alkylene group such as a methylene group or an ethylene group and a carbon ring which is preferably a $C_3$-$C_8$ ring.

As the straight chain or branched chain alkyl group, a straight chain or branched chain $C_1$-$C_6$ alkyl group is preferable. As examples thereof, mention may be made of, for example, a methyl group, an ethyl group, an n-propyl group, an isopropyl group, a butyl group, a t-butyl group, a pentyl group, a hexyl group, and the like. In particular, a methyl group is preferable.

As the cycloalkyl group, a $C_3$-$C_6$ alkyl group is preferable. As examples thereof, mention may be made of, for example, a cyclopropyl group, a cyclobutyl group, a cyclopentyl group, a cyclohexyl group and the like. A cyclopentyl group and a cyclohexyl group are preferable.

As the alkenyl group, a $C_2$-$C_{12}$ alkenyl group is preferable, and a $C_2$-$C_6$ alkenyl group is more preferable. As examples of $C_2$-$C_6$ alkenyl groups, mention may be made of a vinyl group, a propenyl group, a butenyl group, a pentenyl group, a hexenyl group, and the like. In particular, a vinyl group is preferable.

As the aralkyl group, a $C_7$-$C_{12}$ aralkyl group is preferable and a $C_7$-$C_{12}$ aralkyl group is more preferable. As examples of $C_7$-$C_{12}$ aralkyl groups, mention may be made of a benzyl group, a phenethyl group, a phenylpropyl group, and the like. In view of producibility of volatile benzene by means of thermal decomposition, in particular, a benzyl group is preferable.

As the aryl group, a $C_6$-$C_{12}$ aryl group is preferable. As examples thereof, mention may be made of a phenyl group, a naphthyl group, and a tolyl group. In view of producibility of volatile benzene by means of thermal decomposition, in particular, a phenyl group is preferable.

The aforementioned hydrocarbon group may have a substituent. As examples of the aforementioned substituents, mention may be made of a halogen such as a fluorine atom, a chlorine atom, a bromine atom, an iodine atom, or the like: a hydroxy group; a $C_1$-$C_6$ alkoxy group such as a methoxy group, an ethoxy group, an n-propoxy group, an isopropoxy group, or the like; an amino group; an amide group; a nitro group; an epoxy group; and the like. The substituent can bind at any position of a hydrocarbon chain, a saturated or unsaturated ring, and an aromatic ring.

In addition, as examples of the alkoxy groups for $R^1$ to $R^5$, mention may be made of a methoxy group, an ethoxy group, an n-propoxy group, and an isopropoxy group.

In addition, as examples of the halogen atoms for $R^1$ to $R^5$, mention may be made of a fluorine atom, a chlorine atom, a bromine atom, or an iodine atom.

In addition, as examples of the acyloxy groups for $R^1$ to $R^5$, mention may be made of an acetoxy group.

The molecular weight of the aforementioned polysilanes is not particularly limited, but a relatively large molecular weight is preferable. More particularly, the weight average molecular weight preferably ranges from 200 to 100,000, more preferably ranges from 300 to 100,000, and, in particular, more preferably ranges from 400 to 50,000. The weight average molecular weight can be determined as a relative value with respect to standard polystyrene in gel permeation chromatography.

The aforementioned polysilanes can be prepared by means of various known methods. As examples thereof, mention may be made of, for example, a method in which a dehalogenation reaction of a halosilane is carried out in the presence of an alkali metal (J. Am. Chem. Soc., 110, 124 (1988); Macromolecules, 23, 3423 (1990); and the like), a method in which an anion polymerization of disilene is carried out (Macromolecules, 23, 4494 (1990) and the like), a method in which a dehalogenation reaction of a halosilane by means of electrode reduction (J. Chem. Soc., Chem. Commun., 1161 (1990); J. Chem. Soc., Chem. Commun., 897 (1992); and the like), a method in which a dehalogenation reaction of a halosilane is carried out in the presence of magnesium (WO98/29476 and the like), a method in which a dehydrogenation reaction of a hydrosilane is carried out in the presence of a metal catalyst (Japanese Unexamined Patent Application, First Publication No. H04-334551 and the like), and the like.

The polysilane may be a copolymer with another polymer. For example, a copolymer formed from a polysilane unit and a silalkylene (such as silethylene) unit; a copolymer formed from a polysilane unit and a silarylene (such as silphenylene) unit; a copolymer formed from a polysilane unit and a polysilazane unit; a copolymer formed from a polysilane unit and a polysiloxane unit; or the like may be used as a polysiloxane.

As the polysilazane, for example, one represented by the following average unit structure (II):

$$(R^6R^7R^8SiNR^9)_e(R^{10}R^{11}SiNR^{12})_f(R^{13}SiNR^{14})_g(SiNR^{15})_h \qquad (II)$$

wherein
$R^6$ to $R^{15}$ independently represent a hydrogen atom, a substituted or non-substituted monovalent hydrocarbon group having 1 to 20 carbon atoms, an alkoxy group, a halogen atom, or an acyl group; and
e, f, g and h represent 0 or a positive number, with the proviso that e + f + g + h = 1, can be used. The hydrocarbon group used here has the same meanings as defined in the aforementioned $R^1$ to $R^5$.

The polysilazane represented by the aforementioned average unit formula (II) is composed of at least one unit selected from the structural units represented by $(R^6R^7R^8SiNR^9)$, $(R^{10}R^{11}SiNR^{12})$, $(R^{13}SiNR^{14})$, and $(SiNR^{15})$. As examples thereof, mention may be made of, for example, a straight chain polysilazane formed from $(R^6R^7R^8SiNR^9)$ and $(R^{10}R^{11}SiNR^{12})$ units; a cyclic polysilazane formed from $(R^{10}R^{11}SiNR^{12})$ units; a branched chain polysilazane formed from $(R^{13}SiNR^{14})$ or $(SiNR^{15})$ units; a polysilazane formed from $(R^6R^7R^8SiNR^9)$ and $(R^{13}SiNR^{14})$ units; a polysilazane formed from $(R^6R^7R^8SiNR^9)$ and $(SiNR^{15})$ units; a polysilazane formed from $(R^{13}SiNR^{14})$ and $(SiNR^{15})$ units; a polysilazane formed from $(R^{10}R^{11}SiNR^{12})$ and $(R^{13}SiNR^{14})$ units; a polysilazane formed from $(R^{10}R^{11}SiNR^{12})$ and $(SiNR^{15})$ units; a polysilazane formed from $(R^6R^7R^8SiNR^9)$, $(R^{10}R^{11}SiNR^{12})$ and $(RR^{13}SiNR^{14})$ units; a polysilazane formed from $(R^6R^7R^8SiNR^9)$, $(R^{10}R^{11}SiNR^{12})$ and $(SiNR^{15})$ units; a polysilazane formed from $(R^6R^7R^8SiNR^9)$, $(R^{13}SiNR^{14})$ and $(SiNR^{15})$ units; a polysilazane formed from $(R^{10}R^{11}SiNR^{12})$, $(R^{13}SiNR^{14})$ and $(SiNR^{15})$ units; a polysilazane formed from $(R^6R^7R^8SiNR^9)$, $(R^{10}R^{11}SiNR^{12})$, $(R^{13}SiNR^{14})$ and $(SiNR^{15})$ units; and the like. The preferable number of the repeated structural units represented by $(R^6R^7R^8SiNR^9)$, $(R^{10}R^{11}SiNR^{12})$, $(R^{13}SiNR^{14})$ and $(SiNR^{15})$ independently ranges from 2 to 10,000, more preferably ranges from 3 to 1,000, and in particular, preferably ranges from 3 to 500.

The polysilazanes can be prepared in accordance with known methods in the art. The preparation methods for polysilazanes are described in, for example, US Patent No. 4312970, US Patent No. 4340619, US Patent No. 4395460, US Patent No. 4404153, US Patent No. 4482689, US Patent No. 4397828, US Patent No. 4540803, US Patent No. 4543344, US Patent No. 4835238, US Patent No. 4774312, US Patent No. 4929742, and US Patent No. 4916200. In addition, they are also described in Burns et al., in J. Mater. Sci., 22 (1987), pp 2609 - 2614.

The polysilazane may be a copolymer with another polymer. For example, a copolymer formed from a polysilazane unit and a silalkylene (such as silethylene) unit; a copolymer formed from a polysilazane unit and a silarylene (such as silphenylene) unit; a copolymer formed from a polysilazane unit and a polysiloxane (such as -(CH$_3$)$_2$SiO-) unit; and the like can be used as a polysilazane.

The molecular weight of the aforementioned polysilazane is not particularly limited, but is preferably relatively large. More particularly, the weight average molecular weight preferably ranges from 200 to 100,000, more preferably ranges from 300 to 100,000, and in particular, more preferably ranges from 400 to 50,000. The weight average molecular weight can be determined as a relative value with respect to standard polystyrene in gel permeation chromatography.

As the polysiloxane, for example, one represented by the following average unit formula (III):

$$(R^{16}R^{17}R^{18}SiO_{1/2})_i(R^{19}R^{20}SiO_{2/2})_j(R^{21}SiO_{3/2})_k(SiO_{4/2})_l \qquad \text{(III)}$$

wherein
R$^{16}$ to R$^{21}$ independently represent a hydrogen atom, a substituted or non-substituted monovalent hydrocarbon group having 1 to 20 carbon atoms, an alkoxy group, a halogen atom, or an acyl group; and
i, j, k and l represent 0 or a positive number, with the proviso that l + j + k + l = 1, can be used. The hydrocarbon group used here has the same meanings as those defined in the aforementioned R$^1$ to R$^5$.

The polysiloxane represented by the aforementioned average unit structure (III) is composed of at least one unit selected from the structural units represented by (R$^{16}$R$^{17}$R$^{18}$SiO$_{1/2}$), (R$^{19}$R$^{20}$SiO$_{2/2}$), (R$^{21}$SiO$_{3/2}$) and (SiO$_{4/2}$). As examples thereof, mention may be made of, for example, a straight chain polysiloxane formed from (R$^{16}$R$^{17}$R$^{18}$SiO$_{1/2}$) and (R$^{19}$R$^{20}$SiO$_{2/2}$) units; a cyclic polysiloxane formed from (R$^{19}$R$^{20}$SiO$_{2/2}$) units; a branched chain polysiloxane formed from (R$^{21}$SiO$_{3/2}$) or (SiO$_{4/2}$) units; a polysiloxane formed from (R$^{16}$R$^{17}$R$^{18}$SiO$_{1/2}$) and (R$^{21}$SiO$_{3/2}$) units; a polysiloxane formed from (R$^{16}$R$^{17}$R$^{18}$SiO$_{1/2}$) and (SiO$_{4/2}$) units; a polysiloxane formed from (R$^{21}$SiO$_{3/2}$) and (SiO$_{4/2}$) units; a polysiloxane formed from (R$^{19}$R$^{20}$SiO$_{2/2}$) and (R$^{21}$SiO$_{3/2}$) units; a polysiloxane formed from (R$^{19}$R$^{20}$SiO$_{2/2}$) and (SiO$_{4/2}$); a polysiloxane formed from (R$^{16}$R$^{17}$R$^{18}$SiO$_{1/2}$), (R$^{19}$R$^{20}$SiO$_{2/2}$) and (R$^{21}$SiO$_{3/2}$) units; a polysiloxane formed from (R$^{16}$R$^{17}$R$^{18}$SiO$_{1/2}$), (R$^{19}$R$^{20}$SiO$_{2/2}$) and (SiO$_{4/2}$) units; a polysiloxane formed from (R$^{16}$R$^{17}$R$^{18}$SiO$_{1/2}$), (R$^{21}$SiO$_{3/2}$) and (SiO$_{4/2}$) units; a polysiloxane formed from (R$^{19}$R$^{20}$SiO$_{2/2}$), (R$^{21}$SiO$_{3/2}$) and (SiO$_{4/2}$) units; a polysiloxane formed from (R$^{16}$R$^{17}$R$^{18}$SiO$_{1/2}$), (R$^{19}$R$^{20}$SiO$_{2/2}$), (R$^{21}$SiO$_{3/2}$) and (SiO$_{4/2}$) units; and the like. The preferable number of repeated structural units represented by (R$^{16}$R$^{17}$R$^{18}$SiO$_{1/2}$), (R$^{19}$R$^{20}$SiO$_{2/2}$), (R$^{21}$SiO$_{3/2}$) and (SiO$_{4/2}$) independently ranges from 2 to 10,000, more preferably ranges from 3 to 1,000, and in particular, preferably ranges from 3 to 500.

The polysiloxanes can be prepared by known methods in the art. The preparation methods for the polysiloxanes are not particularly limited. Most generally, the polysiloxanes can be prepared by hydrolysis of organochlorosilanes. The aforementioned methods and other methods are described in Noll, Chemistry and Technology of Silicones, Chapter 5 (second edition translated in Germany, Academic Press, 1968).

The polysiloxane may be a copolymer with another polymer. For example, a copolymer formed from a polysiloxane unit and a silalkylene (such as silethylene) unit; a copolymer formed from a polysiloxane unit and a silarylene (such as silphenylene) unit; a copolymer formed from a polysiloxane unit and a polysilazane unit; a copolymer formed from a polysiloxane unit and a polysilane unit; and the like can be used as the polysiloxane.

The molecular weight of the aforementioned polysiloxane is not particularly limited, but is preferably relatively large. More particularly, the weight average molecular weight preferably ranges from 200 to 100,000, more preferably ranges from 300 to 100,000, and in particular, more preferably ranges from 400 to 50,000. The weight average molecular weight can be determined as a relative value with respect to standard polystyrene in gel permeation chromatography.

The form of the polysilane, polysilazane, and polysiloxane is not particularly limited, and may be a gas, solid, liquid, or paste form, and the like. In view of handling properties, and the like, a solid form is preferable.

As the curing agent, a known curing agent in the art can be used. As examples of the curing agents, mention may be made of, for example, radical precursors such as organic peroxides (dibenzoyl peroxide; bis-p-chlorobenzoyl peroxide; bis-2,4-dichlorobenzoyl peroxide; di-t-butyl peroxide; dicumyl peroxide; t-butyl perbenzoate; 2,5-bis(t-butylperoxy)-2,3-dimethylhexane; and t-butyl peracetate), and the like; platinum-containing materials such as platinum complexes such as H$_2$PtCl$_6$ and ((C$_4$H$_9$)$_3$P)$_2$PtCl$_2$, and metal platinum. In addition, other curing agents known in the art can also be used. The curing agent is used in an amount sufficiently effective to cause crosslinking of the organo silicon compound. For example, in the case of using an organic peroxide as the curing agent, the curing agent is used in an amount ranging from 0.1 to 5.0 wt% and preferably ranging from 0.1 to 2.0 wt% on the basis of the weight of the organo silicon compound. On the other hand, in the case of using a platinum-containing material as the curing agent, the curing agent is used in an amount so that the platinum metal is present in an amount ranging from 1 to 1,000 ppm and preferably ranging from 50 to 150 ppm on the basis of the weight of the organo silicon compound.

The curing agent is used in order to crosslink the organo silicon compound, depending on the types of the organo silicon compounds. The curing agent may not be subjected to a reaction with the organo silicon compound when the aforementioned heat treatment is carried out, but the organo silicon compound may be preliminarily subjected to a crosslinking treatment with a suitable curing agent at room temperature or at a temperature ranging from 50 to 300°C, prior to the aforementioned heat treatment.

In the case where the aforementioned silicon metal or silicon-containing compound is in the form of a solid, it may be formed into particulates or pellets by means of a pulverization treatment or a granulation treatment, if necessary. The pulverization and granulation methods are not particularly limited, and can be carried out by means of a common pulverizer such as a ball mill, or a common granulator such as pelletizer. The average particle size in the case of particulates is not particularly limited, and, for example, ranges from about 0.01 to 5,000 $\mu$m, preferably ranges from about 0.01 to 2,000 $\mu$m, and more preferably ranges from about 0.01 to 500 $\mu$m. In particular, in the case of the silicon metals or inorgano silicon compounds, the average particle size preferably ranges from about 0.01 to 5 $\mu$m.

(2) Organic compound containing no silicon atoms having a softening point or a melting point

The organic compound containing no silicon atoms used in the present invention has a softening point or a melting point, and is not particularly limited as long as the compound is an organic compound which does not contain any silicon atoms. The organic compounds having no silicon atoms preferably have thermal decomposability and form carbons by means of the carbonization operation described below. The thermally decomposable organic compounds having no silicon preferably have a reduced char yield in the carbonization step described below. The organic compounds having no silicon atoms may be used alone or in combination with two or more types thereof. In the case of using two or more types of organic compounds having no silicon atoms in combination, one with a reduced char yield and one with an increased char yield are preferably combined.

As examples of preferable organic compounds having no silicon atoms, mention may be made of, for example, saturated or unsaturated straight chain hydrocarbons such as methane, ethane, propane, butane, ethylene, acetylene, pentane, hexane, and the like; saturated or unsaturated cyclic hydrocarbons such as cyclopentane, cyclohexane, cyclopentene, cyclohexene, and the like; saturated or unsaturated monocyclic aromatic compounds such as benzene, toluene, xylene, ethylbenzene, phenol, cresol, nitrobenzene, chlorobenzene, styrene, hexaphenylethane, and the like; saturated heterocyclic compounds such as tetrahydrofuran and the like; unsaturated heterocyclic compounds such as furan, pyrrole, pyridine, and the like; condensed heterocyclic compounds such as coumarone and the like; condensed-ring hydrocarbons such as naphthalene, pyrene, indene, anthracene, phenanthrene, triphenylene, chrysene, perylene, pentaphene, pentacene, benzopyrene, picene, naphthacene, acenaphthylene, coronene, benzocoronene, fluoranthene, rubicene, hexaphene, ovalene, decacyclene, 9,9'-biantolyl, and the like; polyolefins such as polyethylene, polypropylene and the like; polystyrene; polyphenylene; thermoplastic resins such as polyacryl, polyamide, polycarbonate, saturated polyester, hydrocarbon resin and the like; coal tar; pitch; and the like. In particular, preferable organic compounds containing no silicon atoms are polystyrene and acenaphthylene. As examples of those having a reduced char yield, mention may be made of the aforementioned straight chain hydrocarbons, cyclic hydrocarbons, monocyclic aromatic compounds, saturated heterocyclic compounds, unsaturated heterocyclic compounds, condensed heterocyclic compounds, condensed cyclic hydrocarbons, thermoplastic resins and the like. In addition, as examples of those having an increased char yield, mention may be made of coal tar, pitch and the like.

The number average molecular weight or weight average molecular weight of the resin used as the organic compound containing no silicon atoms is not particularly limited, and the steric structure thereof is not particularly limited. For example, in the case of polystyrene, one having an atactic, isotactic, or syndiotactic structure can be used.

The form of the organic compound containing no silicon atoms is not particularly limited, and may be a gas, solid, liquid, or paste form, or the like. In view of handling properties, a solid form is preferable. In the case of a solid form, the organic compound containing no silicon atoms in the form of a particulate or a pellet can be obtained by means of a pulverization treatment or a granulation treatment, if necessary. The pulverization and granulation methods are not particularly limited, and can be carried out by means of a common pulverizer such as a ball mill, or by means of a common granulator such as a pelletizer. The average particle size of the organic compound containing no silicon atoms in the form of a particulate is not particularly limited, and, for example, may range from about 0.1 to 5,000 $\mu$m, preferably range from about 0.1 to 2,000 $\mu$m, and more preferably range from about 0.1 to 500 $\mu$m.

In the aforementioned carbonization step, in addition to the aforementioned component (1) and the aforementioned component (2), any other components can also be subjected to a heat treatment. As examples of the other components, mention may be made of, for example, electrical conducting materials, fillers, lubricants, deflocculants, dispersants, and curing agents for the organo silicon compounds. The preferable components thereof include electrical conducting materials and curing agents.

As examples of electrical conducting materials, mention may be made of acetylene black, ketjen black, graphite, carbon fiber, and carbon nanotube.

As described above, in the present invention, a silicon-containing carbon-based composite material can be obtained by means of a simple method in which the aforementioned component (1) and the aforementioned component (2) are heated at a relatively low temperature to carry out carbonization.

(3) Carbonization

In the present invention, both of the aforementioned component (1) and the aforementioned component (2) are subjected to a heat treatment (baking) in an inert gas or in a vacuum, at a temperature ranging from 300 to 1,500°C, preferably ranging from 500 to 1,500°C, more preferably ranging from 600 to 1,500°C, and in particular, preferably ranging from 600 to 1,300°C, to carry out carbonization.

In the carbonization step of the present invention, the aforementioned component (1) and the aforementioned component (2) may be together present, and the mode for coexistence of the aforementioned components (1) and (2) is not particularly limited. Therefore, for example, the aforementioned component (1) and the aforementioned component (2) may be preliminarily mixed, contacted, or come close to coexist before carbonization. Alternatively, at the time of carbonization, the aforementioned component (1) and the aforementioned component (2) may be mixed, contacted, or come close to coexist. Preferably, the aforementioned component (1) and the aforementioned component (2) are preliminarily mixed, contacted, or come close to coexist before carbonization.

In the case of preliminarily mixing the aforementioned component (1) and the aforementioned component (2) before carbonization, the mixing mode is not particularly limited, and any dry or wet mixing can be carried out. In a dry mixing mode, for example, preliminarily milled component (1) and preliminarily milled component (2) are mixed in a common mixer, or the aforementioned component (1) and the aforementioned component (2) are placed in a pulverizer and milled, followed by stirring the milled products. In a wet mixing mode, for example, the aforementioned component (1) and the aforementioned component (2) are dissolved or dispersed in a solvent, followed by stirring the solution or dispersion. As the aforementioned solvent, any solvent can be used, and for example, water, an alcohol, a hydrocarbon, an ester, a ketone, or an ether can be used. In view of heat treatment efficiency, as the solvent, a volatile one which can be easily removed after mixing, such as an alcohol, ether, hydrocarbon, or the like is preferable.

The coexistence ratio of the aforementioned component (1) and the aforementioned component (2) is not particularly limited as long as the coexistent mixture can be carbonized. For example, a ratio of 0.1 to 10,000 parts by weight of the aforementioned component (2) with respect to 100 parts by weight of the aforementioned component (1) can be used. Preferably, a ratio of 1 to 5,000 parts by weight, and preferably 5 to 1,000 parts by weight of the aforementioned component (2) with respect to 100 parts by weight of the aforementioned component (1) can be used.

As examples of the inert gas, mention may be made of, for example, nitrogen, helium, and argon. A reducing gas such as a hydrogen gas may be included in the aforementioned inert gas.

The heating temperature (finally reachable temperature) in the carbonization step ranges from 300 to 1,500°C. The lower limit of the temperature is preferably 500°C, more preferably 600°C, and in particular, preferably 700°C. On the other hand, the upper limit of the temperature is preferably 1,400°C and in particular, preferably 1,200°C. Any range can be selected between the aforementioned upper limit and lower limit of the temperature. If the finally reachable temperature exceeds the upper limit of the aforementioned range, a rearrangement reaction occurs in the obtained silicon-containing carbon-based composite material, and thereby, the growth of the non-preferable silicon carbide is furthered. On the other hand, if the finally reachable temperature is below the lower limit of the aforementioned range, carbonization is insufficient. The aforementioned carbonization step may be carried out by two or more steps. For example, in the first step, heating at a low temperature is carried out, and in the second step or the steps after that, heating at the finally reachable temperature can be carried out. In addition, the aforementioned heating step may be carried out after milling a mixture of the aforementioned component (1) and the aforementioned component (2).

The aforementioned heat treatment can be carried out in a fixed bed type or fluidized bed type carbonization furnace. The heating methods and types of carbonization furnaces are not particularly limited as long as they have a function capable of increasing the temperature to a specified temperature. As examples of carbonization furnaces, mention may be made of, for example, Riedhammer furnace, a tunnel furnace, a single furnace and the like.

(4) Porous silicon-containing carbon-based composite material

The silicon-containing carbon-based composite material of the present invention obtained via the aforementioned carbonization step (3) is porous, and can be represented by the following average structural formula (IV):

$$Si_nC_xO_yH_z \qquad (IV)$$

wherein $0 < n$, $0 < x$, $0 \leq y$, and $0 \leq z$, $0.5 < x/n < 100$, $0 \leq y/n < 5$, and $0 \leq z/n < 10$.

In the aforementioned formula, $x/n$ is preferably more than 1, but less than 30. In addition, $y/n$ is preferably not less than 0, but less than 3, and more preferably not less than 0, but less than 1.5. In addition, $z/n$ is preferably not less than 0, but less than 5. If the value of $x/n$ is other than the values within the aforementioned range, lithium ion storage capacity may be extremely reduced, and thereby, an increased reversible capacity may not be obtained, and the charge and discharge cycle characteristics may be reduced. In addition, if the value of $y/n$ is other than the values within the aforementioned range or if the value of z/n is other than the values within the aforementioned range, during the step of introducing the lithium ion to the carbon-based composite material at the initial stage, a stable coating layer (so-called solid electrolyte interface) may not be formed on the surface of the carbon-based composite material, and the initial charge and discharge efficiency may be reduced.

The carbon in the silicon-containing carbon-based composite material may have a crystalline structure. The crystalline structure may vary depending on the heating temperature and/or the types of the aforementioned component (1) and/or component (2). The length for an a-axial direction, La, is preferably 0.5 nm or more, but 10 nm or less, is more preferably 0.5 nm or more, but 5 nm or less, and is further preferably 0.5 nm or more, but 2 nm or less. The aforementioned La value can be obtained by means of the following equation from the intensity ratio ($I_D/I_G$) of two bands of Raman spectra.

$$La = 4.4/(I_D/I_G)$$

The silicon-containing carbon-based composite material of the present invention can be used as a particulate. In the case of using the silicon-containing carbon-based composite material as a particulate, the silicon-containing carbon-based composite material obtained after the heat treatment is preferably pulverized by means of the aforementioned pulverizer. The maximum particle size of the particulates of the silicon-containing carbon-based composite material in this case is preferably 100 $\mu$m or less, and more preferably 50 $\mu$m or less. The particulate form of the silicon-containing carbon-based composite material in this case is not particularly limited, and may be a sphere, plate, needle, or fracture form, or the like. In addition, the form may be an indeterminate form by combining the aforementioned forms.

The silicon-containing carbon-based composite material of the present invention is porous. The BET specific surface area thereof is within the range of 0.5 to 500 m$^2$/g, preferably within the range of 1 to 400 m$^2$/g, more preferably within the range of 1 to 300 m$^2$/g, further preferably within the range of 1 to 100 m$^2$/g, furthermore preferably within the range of 1 to 50 m$^2$/g, and in particular, preferably within the range of 4 to 50 m$^2$/g. If the aforementioned BET specific surface area is less than the lower limit of the aforementioned range, an increased reversible capacity may not be obtained. On the other hand, if the specific surface area exceeds the upper limit of the aforementioned range, irreversible capacity may be increased, and thereby, the initial charge and discharge efficiency may be reduced. In addition, in the silicon-containing carbon-based composite material of the present invention, the adsorption isotherm of nitrogen is classified into TYPE I among typical 6 types defined in IUPAC. Therefore, the surface area and pore volume can be evaluated by using the value of $\alpha$s standardized with an adsorbed amount at 0.4 of the relative pressure of the adsorption isotherm of nitrogen in which a non-porous carbon black or the like is used as a standard adsorptive medium. The pore volume obtained by the $\alpha$s plotting ranges from $1.0 \times 10^{-5}$ to 1 cm$^3$/g, preferably ranges from $1.0 \times 10^{-4}$ to $1.0 \times 10^{-1}$ cm$^3$/g, and in particular, preferably ranges from $5.0 \times 10^{-4}$ to $5.0 \times 10^{-2}$ cm$^3$/g. The aforementioned values are derived from the opening pores exposed to the nitrogen molecules. Therefore, it is believed that the aforementioned values fail to include the information of the pores having a size smaller than the aforementioned molecules or the closed pores such as pores formed between aggregates of crystals on the step of the carbonization.

In addition, the porous structure of the silicon-containing carbon-based composite material of the present invention can also be evaluated by a small-angle X-ray scattering. For example, the pores evaluated from the adsorption isotherm of nitrogen target pores opening to the outer surface of the particles. On the other hand, at the small angle area where scattering angle 2 theta ranges from 0 to 5°, if there are holes or particles having different electron density in a medium, an X-ray scattering phenomenon is observed, and information of the porous structure containing not only opening pores but also latent pores can be obtained. The average pore size is preferably within the range of 0.1 to 10 nm, more preferably within the range of 0.1 to 5 nm, and in particular, preferably within the range of 0.2 to 2 nm. If the size of not only opening pores but also latent pores is less than the lower limit of the aforementioned range, an increased reversible capacity may not be obtained. In addition, cycle characteristics may be degraded. On the other hand, if the size exceeds the upper limit of the aforementioned range, density and mechanical strength of the particles may be decreased. In addition, an irreversible capacity due to decomposition of a nonaqueous electrolyte or the like may be increased, and thereby, the initial charge and discharge efficiency may be decreased.

(5) Electrode

The porous silicon-containing carbon-based composite material of the present invention has an increased reversible capacity and a stable charge and discharge cycle characteristic, has a reduced loss of potential at the time of discharging lithium, and can be produced by means of a simple preparation process. Therefore, the silicon-containing carbon-based composite material of the present invention can be suitably used as a material for use in an electrode of a battery. In particular, the silicon-containing carbon-based composite material of the present invention is suitable as a material of a negative electrode of a lithium secondary battery.

The form of the electrode comprising the silicon-containing carbon-based composite material used in the present invention and the preparation method thereof are not particularly limited. For example, an electrode can be produced by a method in which a silicon-containing carbon-based composite material is mixed with a binder to form an electrode; or in which a silicon-containing carbon-based composite material is mixed with a binder and a solvent, the obtained paste is adhered on the collector or is applied on the collector, followed by drying to form an electrode. The amount of the paste applied to the collector is not particularly limited, and usually ranges from about 0.3 to 15 mg/cm$^2$, and preferably ranges from about 0.5 to 10 mg/cm$^2$. In addition, the thickness of the paste applied on the collector ranges, for example, from about 30 to 500 $\mu$m, and preferably ranges from about 50 to 300 $\mu$m. Means for drying after application is not particularly limited. A drying treatment by heating under vacuum is preferable. The thickness of the electrode material on the collector after the drying treatment ranges, for example, from about 10 to 300 $\mu$m, and preferably ranges from about 20 to 200 $\mu$m. In the case of a silicon-containing carbon-based composite material in the form of fibers, they are arranged in a mono-axis direction or are formed into a fabric, followed by bundling with a conductive fiber such as metal or conductive polymer or knitting therewith to produce an electrode. In the formation of the electrode, terminals may be combined, if necessary.

The aforementioned collector is not particularly limited. As examples thereof, mention may be made of mesh, foil or the like of a metal such as copper, nickel, or alloys thereof, or the like.

As examples of the aforementioned binder, mention may be made of, for example, a fluorine-based resin (such as polyvinylidene fluoride, polytetrafluoroethylene, or the like), a styrene-butadiene resin, and the like. The usage amount of the binder is not particularly limited. The usage amount thereof may range from about 5 to 30 parts by weight, and preferably ranges from about 5 to 20 parts by weight with respect to 100 parts by weight of the silicon-containing carbon-based composite material. If the usage amount of the binder is outside of the aforementioned range, for example, the adhesion strength of the silicon-containing carbon-based composite material on the surface of the collector may be impaired, and an insulating layer which may cause an increase in inner electrode resistance may be formed. The method for preparing a paste is not particularly limited, and for example, a method in which a silicon-containing carbon-based composite material is mixed with a mixture (or a dispersion) of a binder and an organic solvent may be mentioned.

As the aforementioned solvent, in general, a solvent which can dissolve or disperse the binder can be used. As examples thereof, mention may be made of, for example, an organic solvent such as N-methylpyrrolidone, N,N-dimethylformamide, or the like. The usage amount of the solvent is not particularly limited as long as a paste can be formed. For example, the solvent is used in an amount usually ranging from about 50 to 500 parts by weight, preferably ranging from about 100 to 400 parts by weight, and more preferably ranging from about 100 to 300 parts by weight, with respect to 100 parts by weight of the silicon-containing carbon-based composite material.

In the electrodes of the present invention, any additives may be added. For example, an electrode may be produced by adding a conductive auxiliary agent thereto. The usage ratio of the conductive auxiliary agent is not particularly limited. The conductive auxiliary agent may be used in an amount ranging from about 5 to 30 parts by weight, and preferably ranging from about 5 to 20 parts by weight, with respect to 100 parts by weight of the silicon-containing carbon-based composite material. If the amount is outside of the aforementioned range, the conductivity may be insufficiently imparted, and the ratio of the silicon-containing carbon-based composite material may be relatively reduced.

As examples of the conductive auxiliary agents, mention may be made of, for example, carbon black (such as ketjen black, acetylene black, or the like), carbon fiber, carbon nanotube, and the like. The conductive auxiliary agents may be used alone or in combination with two or more types thereof. For example, the conductive auxiliary agent can be mixed in a paste containing the silicon-containing carbon-based composite material, the binder, and the solvent.

In addition, as other optional additives, a negative electrode activator such as graphite or the like may be added to the electrodes of the present invention.

(6) Battery

The types of the battery comprising the electrode of the present invention and methods for producing the same are not particularly limited. As examples of batteries, mention may be made of a lithium ion primary battery, a lithium ion secondary battery, a capacitor, a hybrid capacitor (redox capacitor), an organic radical battery, or a dual carbon battery. In particular, a lithium ion secondary battery is preferable. The lithium ion secondary battery can be produced in accordance with a common method using constructional elements such as a negative electrode formed from the aforementioned electrode, a positive electrode capable of charging and discharging lithium, an electrolyte, a separator, a collector, a gasket, a closing board, a case and the like.

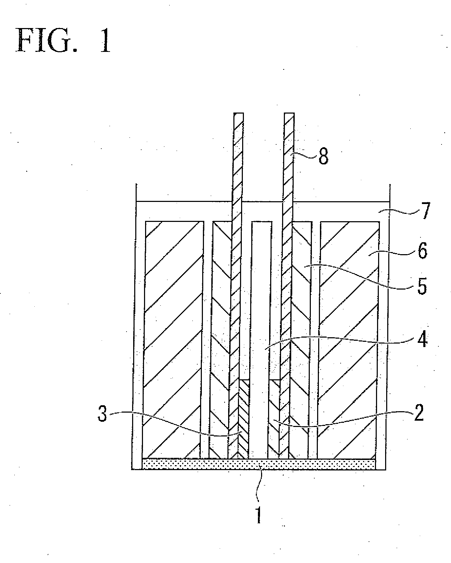

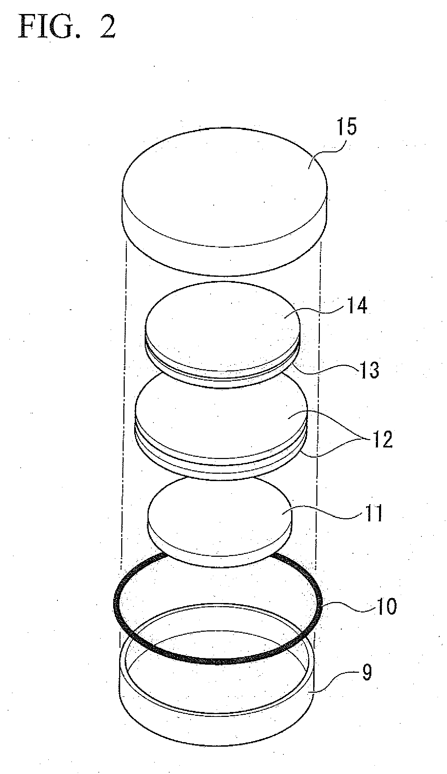

The lithium ion secondary battery of the present invention is described in detail with reference to Fig. 1 and Fig. 2 showing the lithium ion secondary batteries prepared in the Examples.

Fig. 1 is a cross-sectional view showing an example of a lithium ion secondary battery of the present invention prepared in Example. The aforementioned lithium ion secondary battery is equipped with a container having a generally cylindrical form. In the lithium ion secondary battery, molecular sieve 1 is appropriately placed at the bottom of the container, but the molecular sieve is an optional element. In addition, in the lithium ion secondary battery, a separator 4 is provided in the diameter direction of the battery, and a positive electrode 2 and a negative electrode 3 formed from the aforementioned electrode containing the silicon-containing carbon-based composite material are also provided respectively on both sides of said separator. At the outer side of said positive electrode 2 and said negative electrode 3, collectors 8, polypropylene plates 5, and polypropylene fillers 6 are successively provided toward the periphery side of the container. Said polypropylene plates 5 and polypropylene fillers 6 are optional elements.

Said separator 4 is formed by contacting a pair of members having a general plate shape, each member having a height lower than a height of said container, but may be formed from one member. Each of said positive electrode 2 and negative electrode 3 contacting said separator 4 is formed from a member having a general plate shape with a size smaller than that of said separator 4, and said positive electrode 2 and negative electrode 3 are provided by facing each other via said separator 4. Said collectors 8 contacting the outer side of each of said positive electrode 2 and said negative electrode 3 have a height higher than that of said container and are formed from a pair of members of a general plate shape. The leading end parts thereof stick out from said container. Said polypropylene plates 5 contacting the outer side of said collectors 8 are formed from a pair of members with a general plate shape having a generally same height as that of said separator 4. In addition, on the outer side of said polypropylene plates 5, polypropylene fillers 6 are provided with a gap, and are formed from a pair of members with a generally semi-circular column shape (partially column shape), having a generally same height as that of said separator 4. In addition, in said container, an electrolyte 7 is stored, and only the leading end parts of said collectors 8 stick out from the liquid surface of said electrolyte 7. In the lithium ion secondary battery of the Example, by providing said polypropylene fillers 6 as described above, the usage amount of said electrolyte 7 can be reduced.

Fig. 2 is a general, exploded perspective view of a button-shaped battery which is another example of a lithium ion secondary battery of the present invention prepared in the Examples. In the lithium secondary battery shown herein, an insulating packing 10, a positive electrode 11, separators 12, a negative electrode 13 formed from said electrode containing the silicon-containing carbon-based composite material, and a collector 14 are successively placed in a case 9 having a hollow cylinder shape with an opening at the upper face and a bottom, from the lower end part to the upper end part of the case so that all the aforementioned members have a coaxial core. Said insulating packing 10 is formed so as to have a ring shape with a size generally equal to the outer circumference of said case 9, and said case 9 is equipped with said insulating packing 10. Said positive electrode 11 is formed to have a size slightly smaller than the inner circumference of said case 9. In this lithium ion secondary battery, said separators 12 are formed by a pair of general disc-shaped members with the general same size as that of the inner circumference of said case 9, but may be formed by one disc shaped member. An electrolyte is impregnated in said separators 12. Said negative electrode 13 is formed in a general disc shape having the general same size as that of said positive electrode 11, and is positioned so as to oppose to said positive electrode 11 via said separators 12. Said collector 14 is formed in a general disc shape with the general same size as that of said negative electrode 13, and is attached tightly to said negative electrode 13. Said collector 14 is composed of a copper foil, nickel mesh, a metal gauze or the like. In addition, a closing plate 15 in the form of a cover having an opening at the lower face with a size slightly larger than that of said case 9 is placed on said case 9. Thereby, a lithium ion secondary battery can be formed.

Said positive electrodes 2, 11 in the lithium ion secondary batteries shown in Fig. 1 and Fig. 2 are not particularly limited, and for example, can be composed of a positive electrode collector, a positive electrode activator, a conductive material, or the like. As examples of positive electrode collectors, mention may be made of, for example, aluminum and the like. As examples of positive electrode activators, mention may be made of, for example, a calcogen metal product having a layer structure such as $TiS_2$, $MoS_3$, $NbSe_3$, $FeS$, $VS_2$, $VSe_2$, and the like; a metal oxide such as $CoO_2$, $Cr_3O_5$, $TiO_2$, $CuO$, $V_3O_6$, $Mo_3O$, $V_2O_5(\cdot P_2O_5)$, $Mn_2O(\cdot Li_2O)$, $LiCoO_2$, $LiNiO_2$, $LiMn_2O_4$ or the like. The preferable positive electrode activator is a lithium composite oxide such as $LiCoO_2$, $LiNiO_2$, $LiMn_2O_4$ or the like. The positive electrode activators may be used alone or in combination with two or more types thereof. As examples of the conductive materials, the same ones as described above can be mentioned.

The electrolytes contained in the lithium ion secondary batteries shown in Fig. 1 and Fig. 2 are not particularly limited, and known electrolytes can be used. For example, by using a solution obtained by dissolving an electrolyte in an organic solvent as an electrolyte, a nonaqueous lithium ion secondary battery can be produced. As examples of electrolytes, mention may be made of, for example, lithium salts such as $LiPF_6$, $LiClO_4$, $LiBF_4$, $LiClF_4$, $LiAsF_6$, $LiSbF_6$, $LiAlO_4$, $LiAlCl_4$, $LiCl$, $LiI$ and the like. As examples of organic solvents, mention may be made of, for example, aprotic solvents such as carbonates (such as propylene carbonate, ethylene carbonate, diethyl carbonate, and the like), lactones (such as gamma-butyrolactone and the like), linear ethers (such as 1,2-dimethoxyethane, dimethyl ether, diethyl ether and the like), cyclic ethers (such as tetrahydrofuran, 2-methyltetrahydrofuran, dioxolan, 4-methyldioxolan, and the like), sulforanes (such as sulforane and the like), sulfoxides (such as dimethylsulfoxide and the like), nitriles (such as acetonitrile, propionitrile, benzonitrile, and the like), amides (such as N,N-dimethylformamide, N,N-dimethylacetamide and the like), polyoxyalkylene glycols (such as diethylene glycol and the like), and the like. The organic solvents may be used alone or in combination with two or more types thereof. The concentration of the electrolyte ranges, for example, from about 0.3 to 5 mol, preferably ranges from about 0.3 to 5 mol, and more preferably ranges from about 0.8 to 1.5, with respect to 1 L of the electrolyte.

Said separators 4, 12 in the lithium ion secondary batteries shown in Fig. 1 and Fig. 2 are not particularly limited. Known separators such as polyolefin-based porous membranes such as porous polypropylene nonwoven fabric, porous polyethylene nonwoven fabric and the like can be used.

The lithium ion secondary batteries of the present invention are not limited to those shown in Fig. 1 and Fig. 2. For example, various forms such as laminate form, pack form, button form, gum form, assembled battery form, a square form and the like can be applied. The lithium secondary batteries of the present invention are preferably used as batteries of mobile microelectronics such as video cameras, personal computers, word processors, radio-cassette recorders, mobile phones, and the like by utilizing characteristics of high energy density, increased capacity, and lightweight.

EXAMPLES

Hereinafter, the present invention is described in detail with reference to Examples. It should be understood that the present invention is not limited to these Examples.

In the Examples, as Examples 1 to 19 and Comparative Examples 1 and 2, various silicon-containing carbon-based composite materials were prepared, and various analyses and evaluations were carried out. In the formulae, Ph represents a phenyl group, and Me represents a methyl group. In addition, "X-ray diffraction", "elemental analysis", "scanning microscope", "laser Raman spectors", "nitrogen gas adsorption and desorption isotherm", and "evaluation of battery characteristics" in each of the Examples and Comparative Examples are described in detail hereinafter.

(X-ray diffraction)

Apparatus: RINT 2000, manufactured by Rigaku Corporation
X-ray generator: Target Cu
X-ray tube voltage: 40 kV
X-ray tube current: 40 mA
$2\Theta = 10\text{-}90°$
Divergent slit: 2/3°
Divergent long: 10 mm
Scattering slit: 2/3°
Receiving slit: 0.3 mm

(Elemental analysis)

CHN analysis: Oxygen cycle combustion/TCD detecting system
Apparatus: NCH-21 model, manufactured by Sumika Chemical Analysis Service, Ltd.
O analysis: High temperature carbon reaction/NDIR detecting system
Apparatus: EMGA-2800, manufactured by Horiba Ltd.
Si analysis: Ashing - alkali fusing - acid dissofution/ICP emission spectrometry
Apparatus: SPS 4000, manufactured by Seiko Instruments Inc.

(Scanning microscope)

Apparatus: JSM-5310 JEOL, manufactured by JEOL Ltd.

(Laser Raman spectors)

Apparatus: NRS-1000, manufactured by JASCO Corporation
Laser wavelength: 532 nm
Objective lens: 20 magnifications
Diaphragm: 3,000
Exposure time: 60 seconds
Cumulated number: 10

(Nitrogen gas adsorption and desorption isotherm)

Apparatus: BELSORP-mini, manufactured by BEL Japan, Inc.

(Small-angle X-ray scattering)

Apparatus: RINT-Ultima III, manufactured by Rigaku Corporation
Measurement method: Transmission method
Measurement conditions
X-ray generator: Target Cu
X-ray tube voltage: 40 kV
X-ray tube current: 50 mA
$2\theta = 0.1\text{-}10°$
Divergent slit: 1 mm
Divergent long: 10 mm
Scattering slit: 0.2 mm
Receiving slit: 0.2 mm
Micropore distribution was evaluated by means of a particle size/pore size analysis software, NANO-Solver, manufactured by Rigaku Corporation.

(Evaluation of battery characteristics)

The charge and discharge characteristics of the lithium ion secondary battery using the silicon-containing carbon-based composite material of the present invention was measured as described below. HJR-110mSM6, HJ1001SM8A or HJ1010mSM8A, manufactured by Hokuto Denko Corporation, was used, and both charging and discharging were carried out with a constant current. At this time, the current was set to a current value of 0.1 C which is a tenth with respect to 372 mAh of a theoretical capacity of graphite per gram of the silicon-containing carbon-based composite material. In addition, charging was set as a capacity until the battery voltage was reduced to 0 V. Discharging was set as a capacity until the battery voltage reached 3 V. At the time of switching charge and discharge, standing with an open circuit for 30 minutes was carried out. With respect to cycle characteristics, the same conditions as described above were used. With the aforementioned current value, in the case of using the silicon-containing carbon-based composite material of the present invention, a long time is required for one cycle. Therefore, in some Examples, the current value was gradually increased from 0.1 C to 3.0 C. In addition, the reversible capacity was the discharged capacity at the first time, and the initial charge and discharge efficiency at the first time was the ratio of the discharged capacity to the charged capacity in the first cycle. The capacity maintaining ratio after the cycle tests was indicated by the charged capacity after the cycle with respect to the charged capacity at the first time.

Example 1

Preparation of a precursor polymer of a silicon-containing carbon-based composite material

3.0 parts by weight of a polysilane (weight average molecular weight (hereinafter, referred to as Mw) = $1.03 \times 10^3$) represented by the average unit formula:

$$(Ph_2Si)_{0.85}(PhSi)_{0.15}$$

3.0 parts by weight of polystyrene beads manufactured by Wako Pure Chemical Industries, Ltd., (softening point = 240°C, average degree of polymerization = 2,000), and 20 parts by weight of toluene with a special grade manufactured by Wako Pure Chemical Industries, Ltd., were placed in a round-bottomed flask made of glass, followed by mixing for one hour at 100°C at normal pressure to dissolve the mixture. Subsequently, toluene was removed by distillation under reduced pressure. Thereby, a precursor polymer of a silicon-containing carbon-based composite material was prepared.

Preparation of a silicon-containing carbon-based composite material

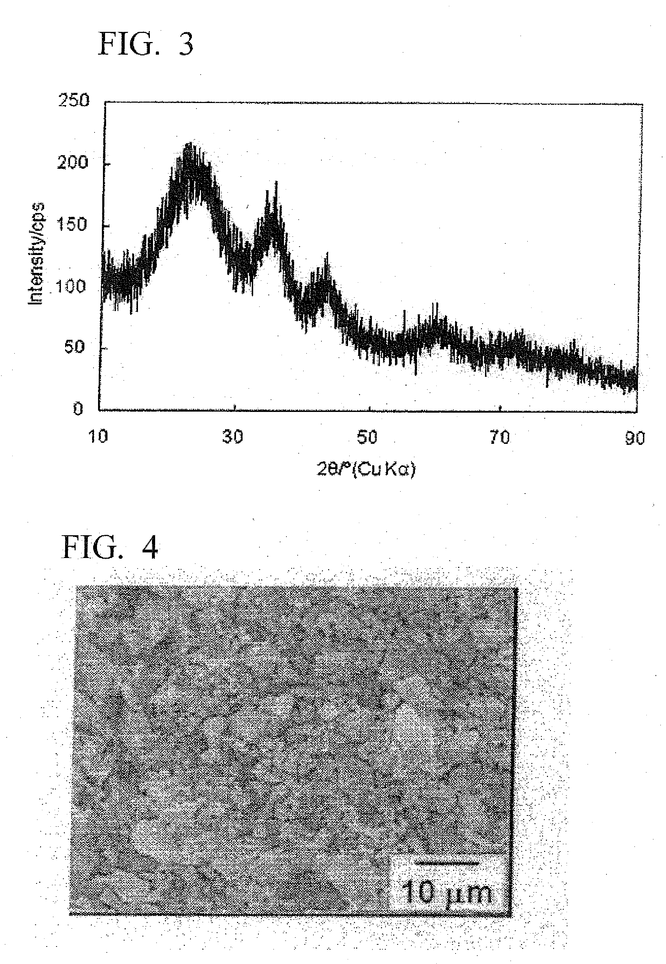

5.0 parts by weight of the aforementioned precursor polymer was placed in a boat made of alumina with an SSA-S grade. The aforementioned boat was set at the central part of a furnace made of quartz in the form of a tube having a length of about 100 cm and an inner diameter of about 4 cm. Subsequently, the inner circumstance of said tubular furnace was maintained for 5 minutes at reduced pressure, and then returned to normal pressure with high purity argon (99.999%). This operation was repeated three times in total. Subsequently, while high purity argon was being supplied thereto with a flow rate of 100 ml/min, the temperature was increased at a rate of 5°C/min, and baking was carried out for one hour at 1,000°C. Thereby, a silicon-containing carbon-based composite material was obtained. Subsequently, the obtained silicon-containing carbon-based composite material was pulverized by means of a ball mill made of zirconia for about 3 hours in air, followed by classifying by means of a sieve made of stainless steel with a #300 mesh. Thereby, a silicon-containing carbon-based composite material in the form of particulates having a maximum particle size of 50 $\mu$m was obtained. An X-ray diffraction pattern and a scanning electron micrograph of the obtained silicon-containing carbon-based composite material are respectively shown in Fig. 3 and Fig. 4. In addition, the results of elemental analysis of the obtained silicon-containing carbon-based composite material are shown in Table 1. In addition, the results obtained from an adsorption isotherm of nitrogen are shown in Table 2.

Preparation of a negative polar body

6.94 parts by weight of ketjen black was added to 107.58 parts by weight of the aforementioned silicon-containing carbon-based composite material, followed by mixing in a mortar for 15 minutes. Subsequently, 12.00 parts by weight of polyvinylidene fluoride was added thereto, and the mixture was further mixed for 15 minutes. Subsequently, N-methyl-2-pyrrolidone as a solvent was added thereto, and thereby, a slurry was formed. Subsequently, the slurry was applied on a copper foil roll by means of a doctor blade method, and thereby, an electrode having a thickness of about 250 $\mu$m was prepared. The electrode obtained above was subjected to vacuum drying for not less than 12 hours at 110°C. Thereby, a negative polar body having a thickness of about 30 $\mu$m was prepared.

Preparation and evaluation of a lithium ion secondary battery

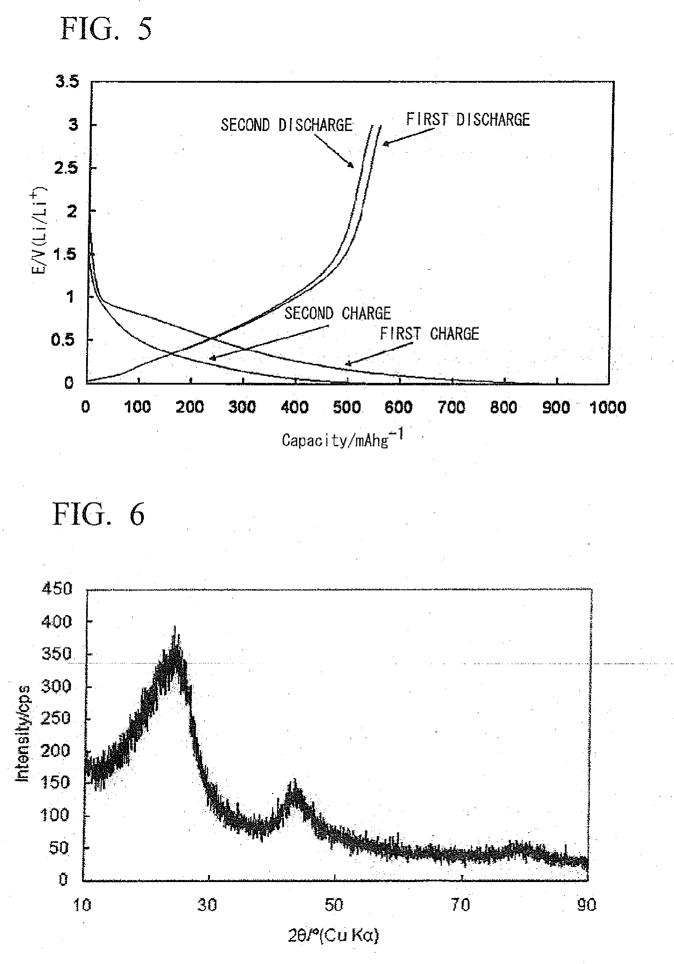

A lithium ion secondary battery having the structure shown in Fig. 1 was prepared. A metal lithium was used as electrode 1, a propylene nonwoven fabric was used as separator 2, the aforementioned negative polar body was used as negative electrode 3, and as an electrolyte, a mixed solvent obtained by dissolving lithium perchlorate in a ratio of 1 mol/L in a mixture (1:1 volume ratio) of ethylene carbonate and diethyl carbonate was used. Subsequently, evaluation of battery characteristics of the lithium ion secondary battery was carried out. The measurement of constant current charge and discharge was carried out with a current value of 0.095 mA. The characteristics of the battery of Example 1 are shown in Table 2 and Fig. 5.

Example 2

Preparation of a precursor polymer of a silicon-containing carbon-based composite material

5.0 parts by weight of a polysilane (Mw = $1.03 \times 10^3$) represented by the following average unit formula:

$$(Ph_2Si)_{0.85}(PhSi)_{0.15}$$

5.0 parts by weight of coal tar pitch (softening point = 143°C; High Pellet, manufactured by Osaka Kasei Co., Ltd.), 0.6 parts by weight of 2,5-dimethyl-2,5-di(t-butylperoxy)hexane, and 50 parts by weight of tetrahydrofuran with a special grade were placed in a two-necked flask equipped with a stirrer, and the mixture was stirred for 30 minutes at normal pressure. Subsequently, tetrahydrofuran was removed by distillation under reduced pressure. Subsequently, a reflux condenser and a thermometer were fixed to the flask. Subsequently, the reaction mixture was subjected to a heat treatment for 30 minutes at 200°C with a nitrogen flow. Thereby, a precursor polymer of a silicon-containing carbon-based composite material was prepared.

Preparation of a silicon-containing carbon-based composite material

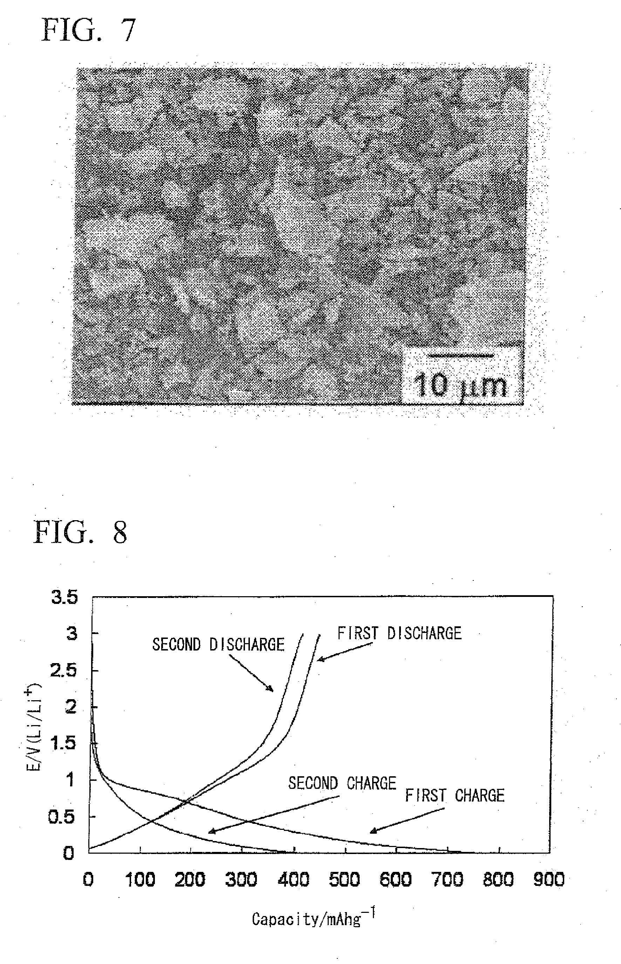

The same processes as described in Example 1 were carried out, with the exception of using 6.42 g of the aforementioned precursor polymer. An X-ray diffraction pattern and a scanning electron micrograph of the silicon-containing carbon-based composite material in the form of particulates having a maximum particle size of 50 $\mu$m are respectively shown in Fig. 6 and Fig. 7. In addition, the results of elemental analysis of the obtained silicon-containing carbon-based composite material are shown in Table 1. In addition, the results obtained from an adsorption isotherm of nitrogen and Raman spectra are shown in Table 2.

Preparation of a negative polar body

The same processes as described in Example 1 were carried out, with the exception of adding 10.73 parts by weight of ketjen black and 10.50 parts by weight of polyvinylidene fluoride to 112.13 parts by weight of the aforementioned silicon-containing carbon-based composite material.

Preparation and evaluation of a lithium ion secondary battery

A lithium ion secondary battery having the structure shown in Fig. 1 was prepared. The same evaluation as described in Example 1 was carried out, with the exception of carrying out the measurement of constant current charge and discharge with a current value of 0.16 mA. The characteristics of the battery of Example 2 are shown in Table 2 and Fig. 8.

Example 3

Preparation of a precursor polymer of a silicon-containing carbon-based composite material

15.00 parts by weight of a polysilane (Mw = $1.03 \times 10^3$) represented by the following average unit formula:

$$(Ph_2Si)_{0.85}(PhSi)_{0.15}$$

15.77 parts by weight of polystyrene beads manufactured by Wako Pure Chemical Industries, Ltd., (softening point = 240°C, average degree of polymerization = 2,000), and 95 parts by weight of toluene with a special grade manufactured by Wako Pure Chemical Industries, Ltd., were placed in a round-bottomed flask made of glass, followed by mixing for one hour at 100°C at normal pressure to dissolve the mixture. Subsequently, toluene was removed by distillation under reduced pressure. Thereby, a precursor polymer of a silicon-containing carbon-based composite material was prepared.

Preparation of a silicon-containing carbon-based composite material

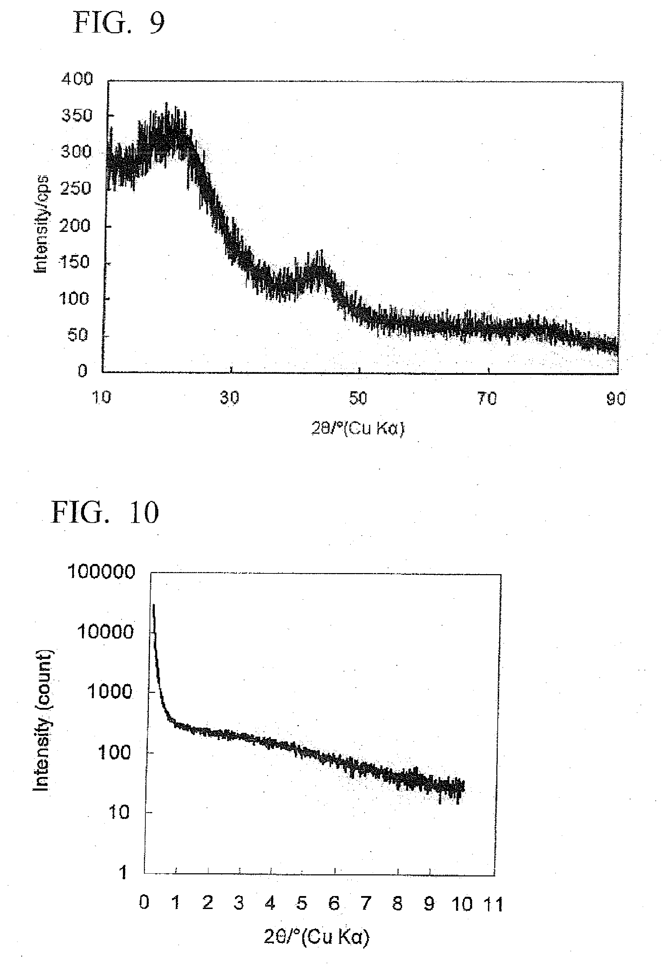

13.00 parts by weight of the aforementioned precursor polymer was placed in a boat made of alumina with an SSA-S grade. The aforementioned boat was set at the central part of a muffle furnace. Subsequently, the inner circumstance of said muffle furnace was maintained for 10 minutes at reduced pressure, and then returned to normal pressure with high purity nitrogen (99.99%). This operation was repeated once in total. Subsequently, while high purity nitrogen was being supplied thereto with a flow rate of 2 L/min, the temperature was increased at a rate of 2°C/min, and baking was carried out for two hours at 600°C. Subsequently, the obtained carbonaceous material was pulverized by means of a ball mill made of zirconia for about 3 hours in air, followed by classifying by means of a sieve made of stainless steel with a #300 mesh. Subsequently, 0.93 parts by weight of the aforementioned carbonaceous material was placed in a boat made of alumina with an SSA-S grade, and the boat was placed at the central part of a furnace made of alumina in the form of a tube having a length of about 100 cm and an inner diameter of about 4 cm. Subsequently, high purity argon (99.999%) was supplied to the tubular furnace for 3 hours with a flow rate of 100 ml/min. Thereby, the inner part of the furnace was replaced with high purity argon. Subsequently, the furnace was maintained for 15 minutes at 100°C. Subsequently, while high purity argon was being supplied thereto with a flow rate of 100 ml/min, the temperature was increased at a rate of 5°C/min, and baking was carried out for one hour at 1,000°C. Thereby, a silicon-containing carbon-based composite material was obtained. An X-ray diffraction pattern, a small-angle X-ray scattering spectrum, and a pore size distribution of the obtained silicon-containing carbon-based composite material are respectively shown in Fig. 9, Fig. 10, and Fig. 11. In addition, the results obtained from an adsorption isotherm of nitrogen, a small-angle X-ray scattering spectrum, and a Raman spectrum are shown in Table 2.

Preparation of a negative polar body

The same processes as described in Example 1 were carried out, with the exception of adding 8.81 parts by weight of ketjen black and 9.00 parts by weight of polyvinylidene fluoride to 106.82 parts by weight of the aforementioned silicon-containing carbon-based composite material.

Preparation and evaluation of a lithium ion secondary battery

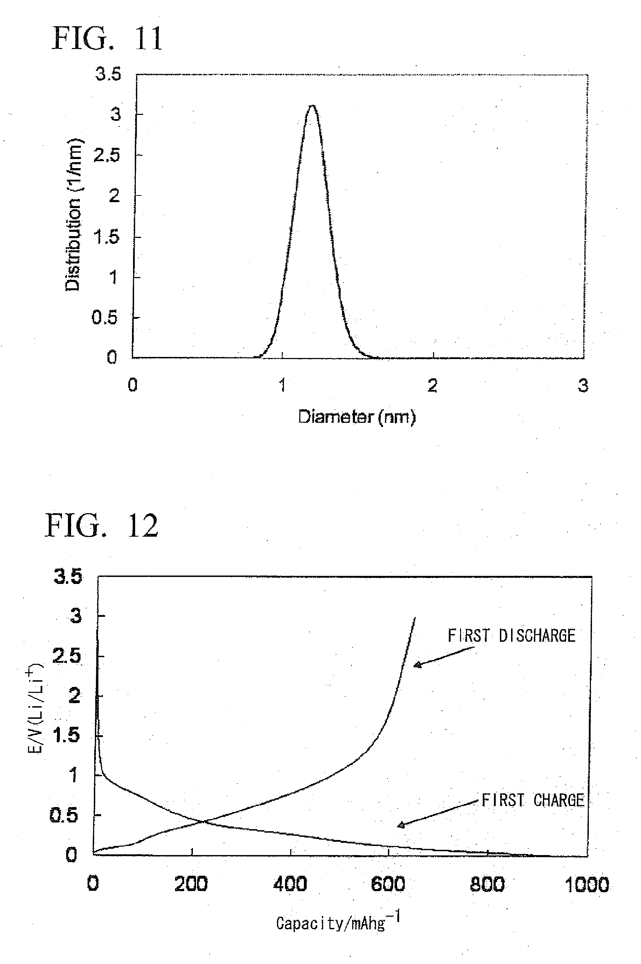

A lithium ion secondary battery having the structure shown in Fig. 2 was prepared. The same evaluation as described in Example 1 was carried out, with the exception of carrying out the measurement of constant current charge and discharge with a current value of 0.19 mA. The characteristics of the battery of Example 3 are shown in Table 2 and Fig. 12.

Example 4

Preparation of a negative polar body

The same processes as described in Example 1 were carried out, with the exception of adding 14.32 parts by weight of ketjen black and 13.72 parts by weight of polyvinylidene fluoride to 150.9 parts by weight of the aforementioned silicon-containing carbon-based composite material obtained in Example 3.

Preparation and evaluation of a lithium ion secondary battery

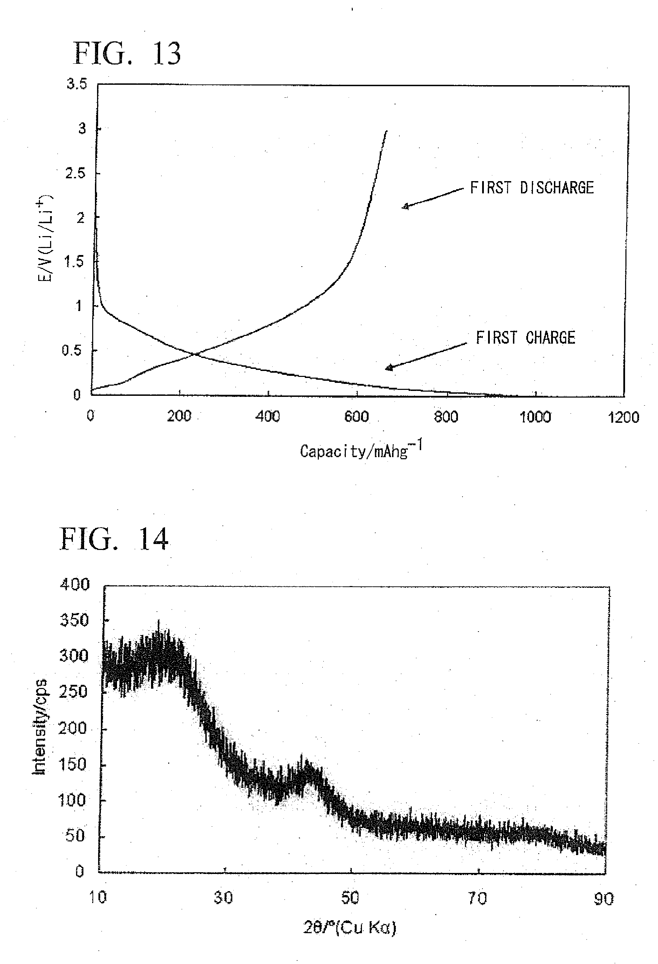

A lithium ion secondary battery having the structure shown in Fig. 2 was prepared. The same evaluation as described in Example 1 was carried out, with the exception of using a mixed solvent obtained by dissolving lithium hexafluorophosphate in a ratio of 1 mol/L in a mixture (1:1 volume ratio) of ethylene carbonate and diethyl carbonate as an electrolyte, and carrying out the measurement of constant current charge and discharge with a current value of 0.18 mA. The characteristics of the battery of Example 4 are shown in Table 2 and Fig. 13.

Example 5

Preparation of a precursor polymer of a silicon-containing carbon-based composite material

The same processes as described in Example 3 were carried out, with the exception of using 40.01 parts by weight of a polysilane (Mw = $1.03 \times 10^3$) represented by the following average unit formula:

$$(Ph_2Si)_{0.85}(PhSi)_{0.15}$$

40.01 parts by weight of polystyrene beads (softening point = 240°C; an average degree of polymerization = 2,000) manufactured by Wako Pure Chemical Industries, Ltd., and 260.2 parts by weight of toluene with a special grade manufactured by Wako Pure Chemical Industries, Ltd.

Preparation of a silicon-containing carbon-based composite material

The same processes as described in Example 3 were carried out, with the exception of using 13.55 parts by weight of the aforementioned precursor polymer, classifying the obtained carbonaceous material with a #2,000 mesh, and using 1.00 parts by weight of the carbonaceous material for the final baking. An X-ray diffraction pattern of the obtained silicon-containing carbon-based composite material is shown in Fig. 14. In addition, results obtained from an adsorption isotherm of nitrogen and a Raman spectrum are shown in Table 2.

Preparation of a negative polar body

The same processes as described in Example 1 were carried out, with the exception of adding 9.28 parts by weight of ketjen black and 9.34 parts by weight of polyvinylidene fluoride to 106.55 parts by weight of the aforementioned silicon-containing carbon-based composite material.

Preparation and evaluation of a lithium ion secondary battery

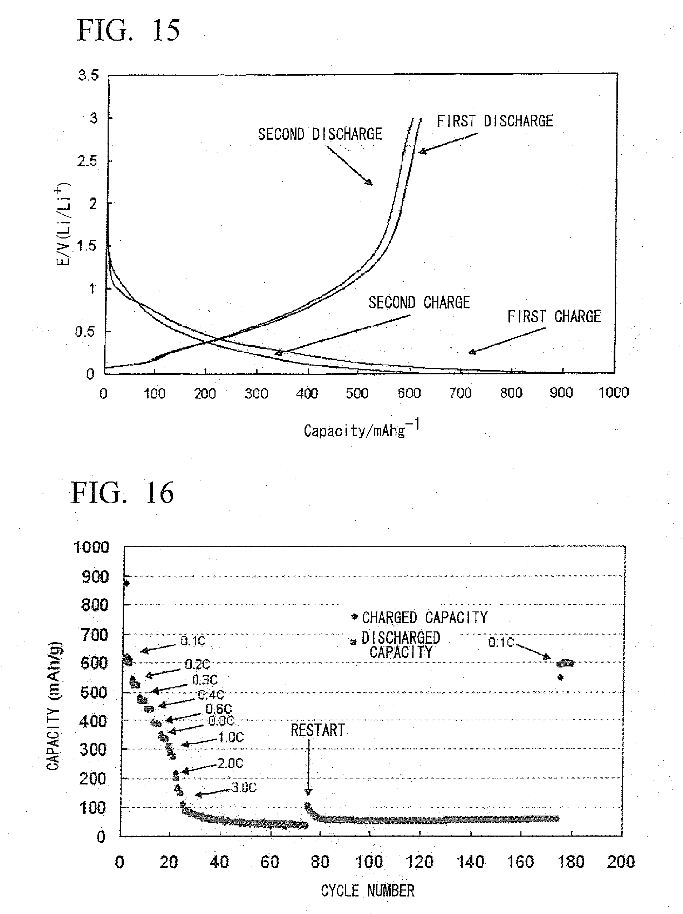

A lithium ion secondary battery having the structure shown in Fig. 2 was prepared. The same evaluation as described in Example 4 was carried out, with the exception of carrying out the measurement of constant current charge and discharge with a current value of 0.19 mA. In addition, the capacity maintenance index was calculated from the capacity obtained under the conditions of cycle characteristics, in which three cycles with a current value of 0.19 mA were carried out, subsequently three cycles were carried out independently with current values twice, 3 times, 4 times, 6 times, 8 times, 10 times, and 20 times higher, subsequently, 150 cycles were carried out with a current value 30 times higher, and subsequently, five cycles were carried out after the current value was returned to 0.19 mA (total number of cycles = 179). The characteristics of the battery of Example 5 are shown in Table 2, Fig. 15 and Fig. 16.

Example 6

Preparation of a precursor polymer of a silicon-containing carbon-based composite material

The same processes as described in Example 3 were carried out, with the exception of using 10.03 parts by weight of a polysilane (Mw = $15.4 \times 10^3$) represented by the following average unit formula:

$$(PhMeSi)_{0.60}(Ph_2Si)_{0.20}(MeSi)_{0.20}$$

10.05 parts by weight of polystyrene beads (softening point = 240°C; an average degree of polymerization = 2,000) manufactured by Wako Pure Chemical Industries, Ltd., and 65.73 parts by weight of toluene with a special grade manufactured by Wako Pure Chemical Industries, Ltd.

Preparation of a silicon-containing carbon-based composite material

The same processes as described in Example 3 were carried out, with the exception of using 12.11 parts by weight of the aforementioned precursor polymer, classifying the obtained carbonaceous material with a #2,000 mesh, and using 0.55 parts by weight of the carbonaceous material for the final baking. The results obtained from an adsorption isotherm of nitrogen and a Raman spectrum are shown in Table 2.

Preparation of a negative polar body

The same processes as described in Example 1 were carried out, with the exception of adding 11.81 parts by weight of ketjen black and 23.94 parts by weight of polyvinylidene fluoride to 201.01 parts by weight of the aforementioned silicon-containing carbon-based composite material.

Preparation and evaluation of a lithium ion secondary battery

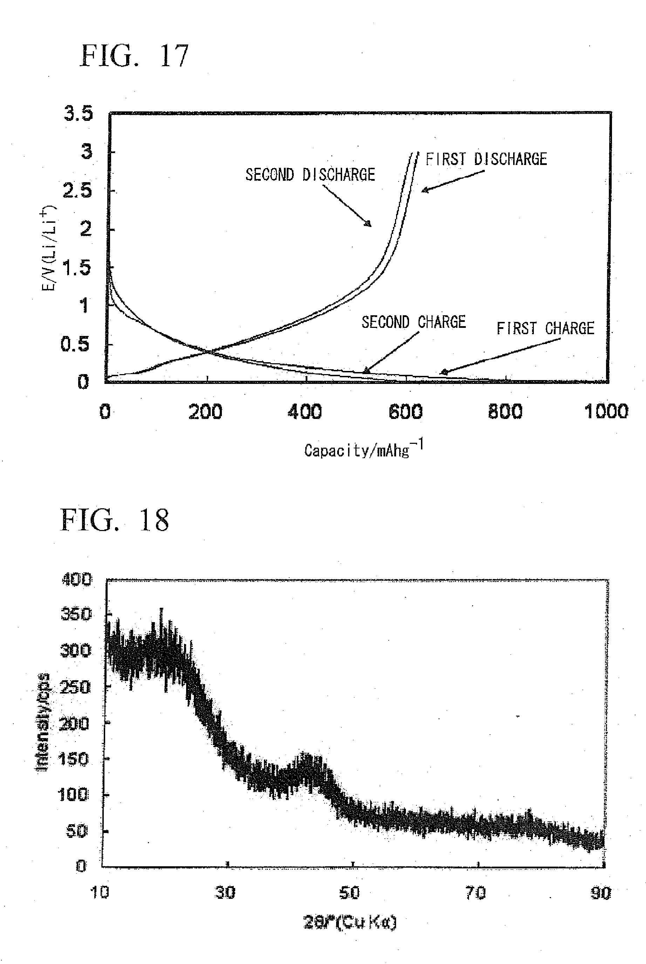

A lithium ion secondary battery having the structure shown in Fig. 2 was prepared. The same evaluation as described in Example 4 was carried out, with the exception of carrying out the measurement of constant current charge and discharge with a current value of 0.17 mA. The characteristics of the battery of Example 6 are shown in Table 2 and Fig. 17.

Example 7

Preparation of a precursor polymer of a silicon-containing carbon-based composite material
The precursor polymer prepared in Example 5 was used.

Preparation of a silicon-containing carbon-based composite material

After the carbonaceous material obtained in Example 5 was classified with a #500 mesh, and was further classified with a #2,000 mesh, the remaining material on the mesh was used. In addition, the same processes as described in Example 3 were carried out, with the exception of using 1.05 parts by weight of the carbonaceous material for the final baking. An x-ray diffraction pattern of the obtained silicon-containing carbon-based composite material is shown in Fig. 18. In addition, the results obtained from an adsorption isotherm of nitrogen and a Raman spectrum are shown in Table 2.

Preparation of a negative polar body

The same processes as described in Example 1 were carried out, with the exception of adding 9.33 parts by weight of ketjen black and 9.61 parts by weight of polyvinylidene fluoride to 106.92 parts by weight of the aforementioned silicon-containing carbon-based composite material.

Preparation and evaluation of a lithium ion secondary battery

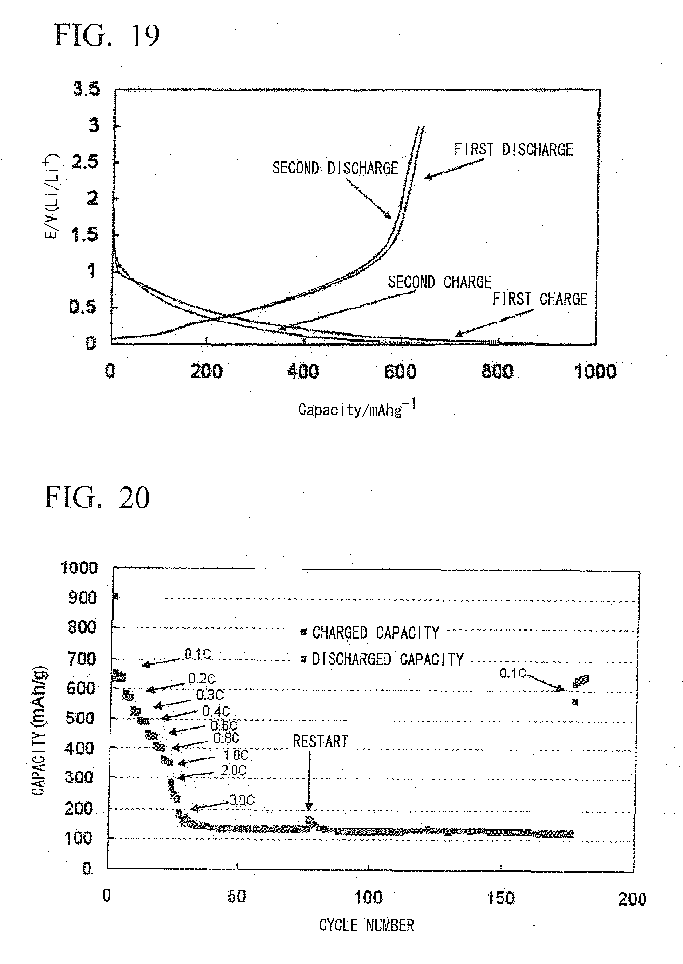

A lithium ion secondary battery having the structure shown in Fig. 2 was prepared. The same evaluation as described in Example 4 was carried out, with the exception of carrying out the measurement of constant current charge and discharge with a current value of 0.11 mA. In addition, the capacity maintenance index was calculated from the capacity obtained under the conditions of cycle characteristics, in which three cycles with a current value of 0.11 mA were carried out, subsequently three cycles were carried out independently with current values twice, 3 times, 4 times, 6 times, 8 times, 10 times, and 20 times higher, subsequently 152 cycles were carried out with a current value 30 times higher, and subsequently, five cycles were carried out after the current value was returned to 0.11 mA (total number of cycles = 181). The characteristics of the battery of Example 7 are shown in Table 2, Fig. 19 and Fig. 20.

Example 8

Preparation of a precursor polymer of a silicon-containing carbon-based composite material

The precursor polymer prepared in Example 5 was used.

Preparation of a silicon-containing carbon-based composite material

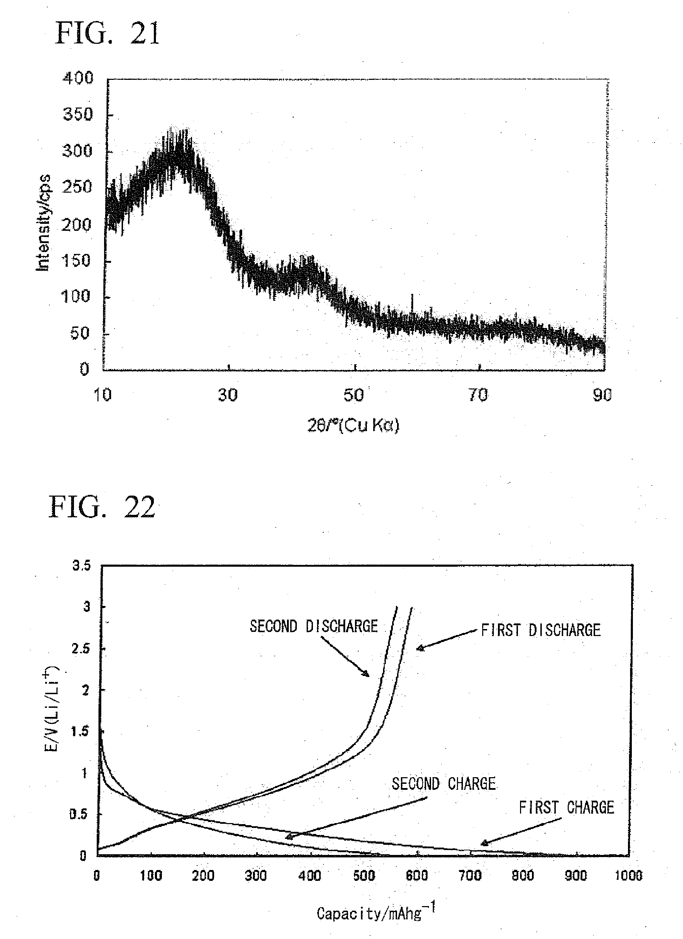

The carbonaceous material obtained after classification in Example 7 was used. The same processes as described in Example 3 were carried out, with the exception of using 1.03 parts by weight of the carbonaceous material for the final baking at 900°C. An X-ray diffraction pattern of the obtained silicon-containing carbon-based composite material is shown in Fig. 21. In addition, the results obtained from an adsorption isotherm of nitrogen and a Raman spectrum are shown in Table 2.

Preparation of a negative polar body

The same processes as described in Example 1 were carried out, with the exception of adding 9.40 parts by weight of ketjen black and 9.50 parts by weight of polyvinylidene fluoride to 107.43 parts by weight of the aforementioned silicon-containing carbon-based composite material.

Preparation and evaluation of a lithium ion secondary battery

A lithium ion secondary battery having the structure shown in Fig. 2 was prepared. The same evaluation as described in Example 4 was carried out, with the exception of carrying out the measurement of constant current charge and discharge with a current value of 0.24 mA. The characteristics of the battery of Example 8 are shown in Table 2 and Fig. 22.

Example 9

Preparation of a precursor polymer of a silicon-containing carbon-based composite material
The precursor polymer prepared in Example 5 was used.

Preparation of a silicon-containing carbon-based composite material

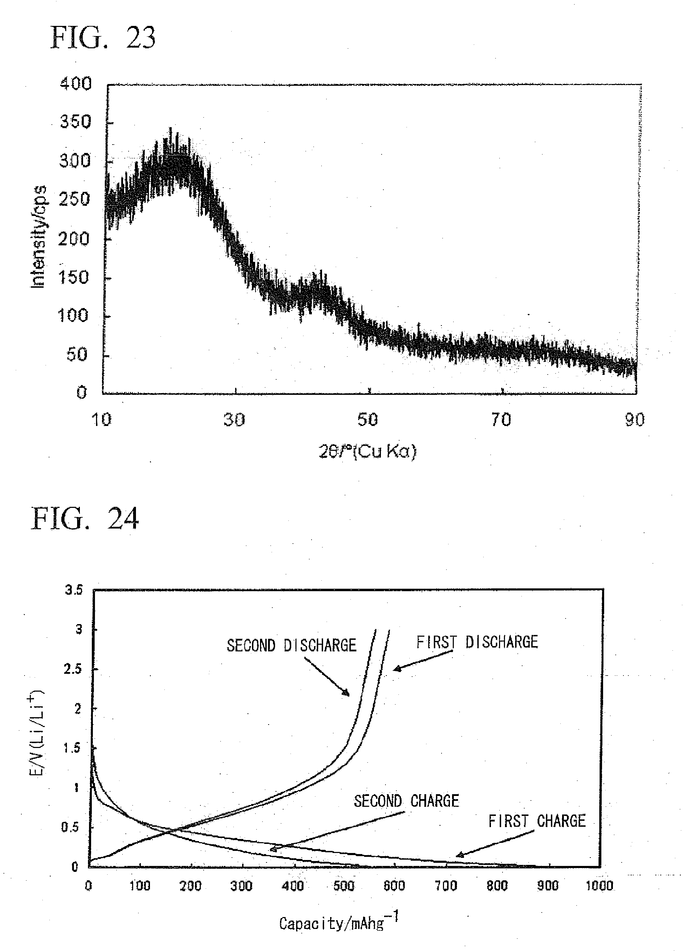

The carbonaceous material obtained after classification in Example 7 was used. The same processes as described in Example 3 were carried out, with the exception of using 0.96 parts by weight of the carbonaceous material for the final baking at 800°C. An X-ray diffraction pattern of the obtained silicon-containing carbon-based composite material is shown in Fig. 23. In addition, the results obtained from a Raman spectrum are shown in Table 2. It was difficult to measure an adsorption isotherm of nitrogen of the obtained silicon-containing carbon-based composite material.

Preparation of a negative polar body

The same processes as described in Example 1 were carried out, with the exception of adding 9.27 parts by weight of ketjen black and 9.46 parts by weight of polyvinylidene fluoride to 107.89 parts by weight of the aforementioned silicon-containing carbon-based composite material.

Preparation and evaluation of a lithium ion secondary battery

A lithium ion secondary battery having the structure shown in Fig. 2 was prepared. The same processes as described in Example 4 were carried out, with the exception of carrying out the measurement of constant current charge and discharge with a current value of 0.11 mA. The characteristics of the battery of Example 9 are shown in Table 2 and Fig. 24.

Example 10

Preparation of a precursor polymer of a silicon-containing carbon-based composite material

The same processes as described in Example 3 were carried out, with the exception of using 13.07 parts by weight of a polysilane (Mw = $3.05 \times 10^3$) represented by the following average unit formula:

$$(PhMeSi)_{0.50}(Ph_2Si)_{0.30}(MeSi)_{0.20}$$

13.01 parts by weight of polystyrene beads (softening point = 240°C; an average degree of polymerization = 2,000) manufactured by Wako Pure Chemical Industries, Ltd., and 82.32 parts by weight of toluene with a special grade manufactured by Wako Pure Chemical Industries, Ltd.

Preparation of a silicon-containing carbon-based composite material

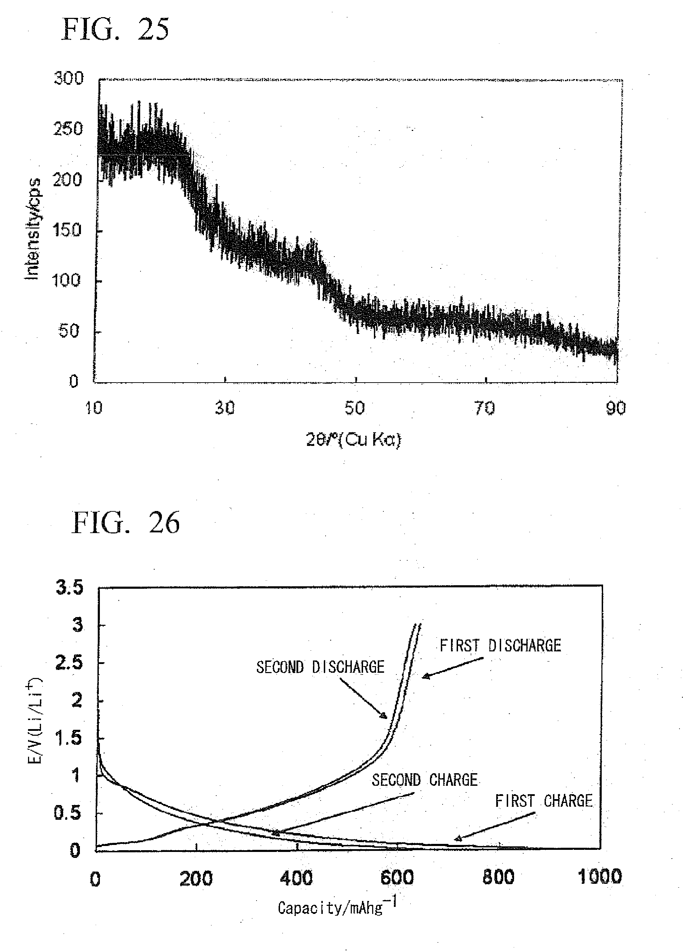

4.45 parts by weight of the aforementioned precursor polymer was used. After the obtained carbonaceous material was classified with a #500 mesh, and was further classified with a #2,000 mesh, the remaining material on the mesh was used. In addition, the same processes as described in Example 3 were carried out, with the exception of using 1.08 parts by weight of the carbonaceous material for the final baking. An X-ray diffraction pattern of the obtained silicon-containing carbon-based composite material is shown in Fig. 25. In addition, the results obtained from an adsorption isotherm of nitrogen and a Raman spectrum are shown in Table 2.

Preparation of a negative polar body

The same processes as described in Example 1 were carried out, with the exception of adding 9.52 parts by weight of ketjen black and 9.56 parts by weight of polyvinylidene fluoride to 107.11 parts by weight of the aforementioned silicon-containing carbon-based composite material.

Preparation and evaluation of a lithium ion secondary battery

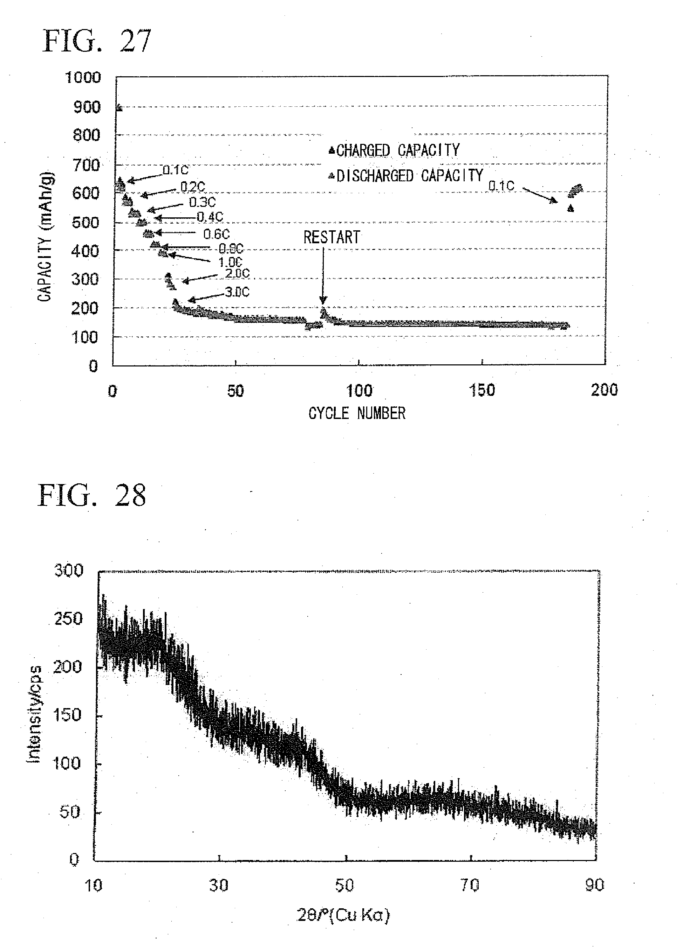

A lithium ion secondary battery having the structure shown in Fig. 2 was prepared. The same evaluation as described in Example 4 was carried out, with the exception of carrying out the measurement of constant current charge and discharge with a current value of 0.11 mA. In addition, the capacity maintenance index was calculated from the capacity obtained under the conditions of cycle characteristics, in which three cycles with a current value of 0.11 mA were carried out, subsequently three cycles were carried out independently with current values twice, 3 times, 4 times, 6 times, 8 times, 10 times, and 20 times higher, subsequently 160 cycles were carried out with a current value 30 times higher, and subsequently, five cycles were carried out after the current value was returned to 0.11 mA (total number of cycles = 189). The characteristics of the battery of Example 10 are shown in Table 2, Fig. 26 and Fig. 27.

Example 11

Preparation of a precursor polymer of a silicon-containing carbon-based composite material

The same processes as described in Example 3 were carried out, with the exception of using 13.02 parts by weight of a polysilane (Mw = $2.16 \times 10^4$) represented by the following average unit formula:

$$(PhMeSi)_{0.85}(MeSi)_{0.15}$$

13.03 parts by weight of polystyrene beads (softening point = 240°C; an average degree of polymerization = 2,000) manufactured by Wako Pure Chemical Industries, Ltd., and 82.01 parts by weight of toluene with a special grade manufactured by Wako Pure Chemical Industries, Ltd.

Preparation of a silicon-containing carbon-based composite material

13.26 parts by weight of the aforementioned precursor polymer was used. After the obtained carbonaceous material was classified with a #500 mesh, and was further classified with a #2,000 mesh, the remaining material on the mesh was used. In addition, the same processes as described in Example 3 were carried out, with the exception of using 1.06 parts by weight of the carbonaceous material for the final baking. An X-ray diffraction pattern of the obtained silicon-containing carbon-based composite material is shown in Fig. 28. In addition, the results obtained from an adsorption isotherm of nitrogen and a Raman spectrum are shown in Table 2.

Preparation of a negative polar body

The same processes as described in Example 1 were carried out, with the exception of adding 9.43 parts by weight of ketjen black and 9.37 parts by weight of polyvinylidene fluoride to 107.42 parts by weight of the aforementioned silicon-containing carbon-based composite material.

Preparation and evaluation of a lithium ion secondary battery

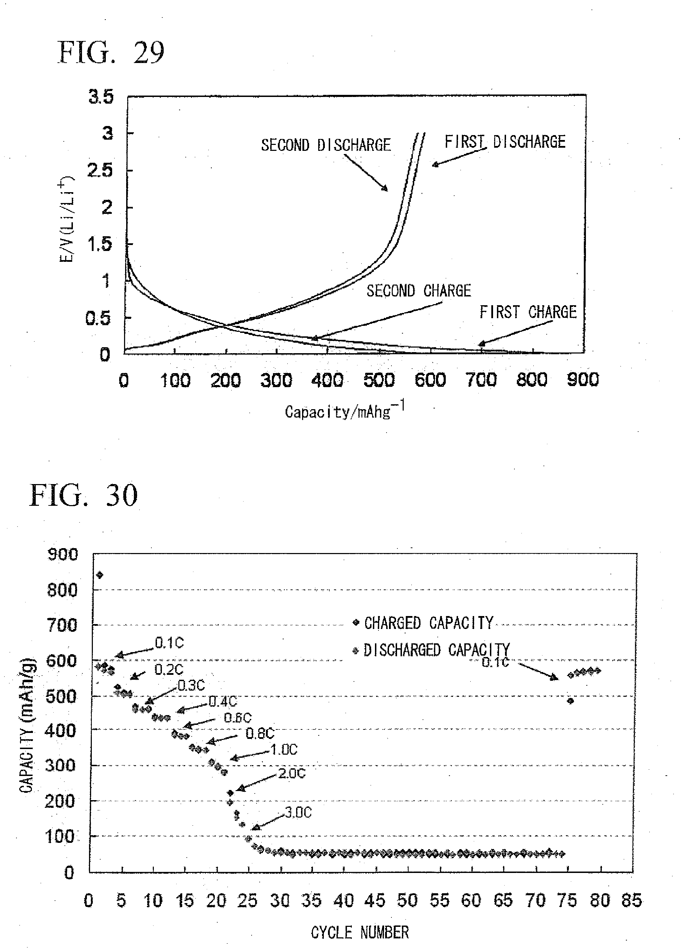

A lithium ion secondary battery having the structure shown in Fig. 2 was prepared. The same evaluation as described in Example 4 was carried out, with the exception of carrying out the measurement of constant current charge and discharge with a current value of 0.17 mA. In addition, the capacity maintenance index was calculated from the capacity obtained under the conditions of cycle characteristics, in which three cycles with a current value of 0.17 mA were carried out, subsequently three cycles were carried out independently with current values twice, 3 times, 4 times, 6 times, 8 times, 10 times, and 20 times higher, subsequently 50 cycles were carried out with a current value 30 times higher, and subsequently, five cycles were carried out after the current value was returned to 0.17 mA (total number of cycles = 79). The characteristics of the battery of Example 11 are shown in Table 2, Fig. 29 and Fig. 30.

Example 12

Preparation of a precursor polymer of a silicon-containing carbon-based composite material

The precursor polymer prepared in Example 5 was used.

Preparation of a silicon-containing carbon-based composite material

The carbonaceous material obtained in Example 5 which was classified with a #500 mesh was used. The same processes as described in Example 3 were carried out, with the exception of using 1.04 parts by weight of the carbonaceous material for the final baking. The results obtained from a Raman spectrum are shown in Table 2.

Preparation of a negative polar body

The same processes as described in Example 1 were carried out, with the exception of adding 9.38 parts by weight of ketjen black and 9.34 parts by weight of polyvinylidene fluoride to 106.68 parts by weight of the aforementioned silicon-containing carbon-based composite material.

Preparation and evaluation of a lithium ion secondary battery

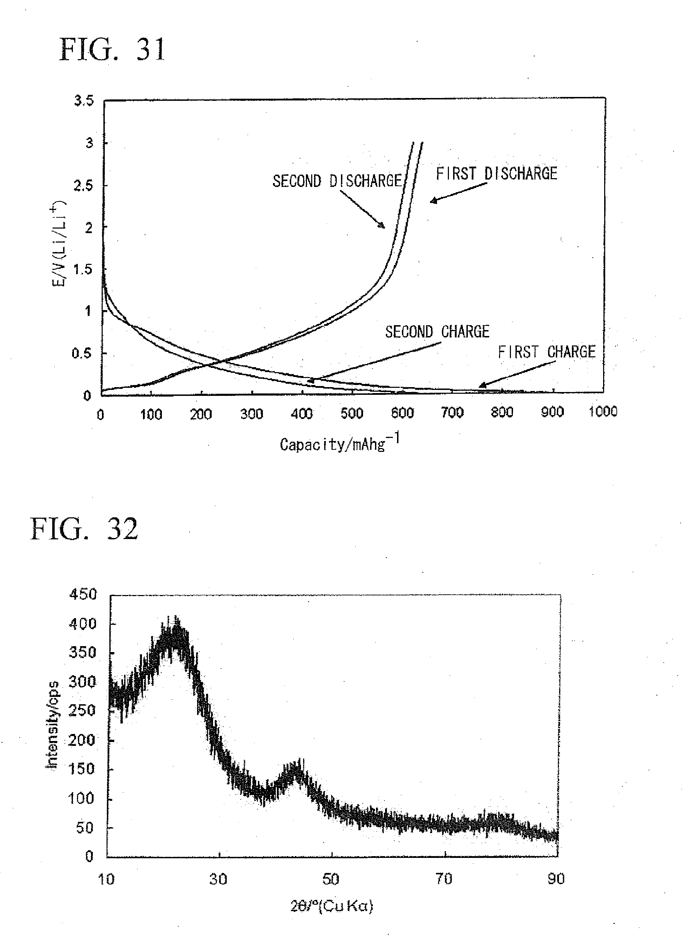

A lithium ion secondary battery having the structure shown in Fig. 2 was prepared. The same processes as described in Example 4 were carried out, with the exception of carrying out the measurement of constant current charge and discharge with a current value of 0.15 mA. The characteristics of the battery of Example 12 are shown in Table 2 and Fig. 31.

Example 13

Preparation of a precursor polymer of a silicon-containing carbon-based composite material

3.51 parts by weight of a polysilane ($Mw = 1.03 \times 10^3$) represented by the following average unit formula:

$$(Ph_2Si)_{0.85}(PhSi)_{0.15}$$

and 3.50 parts by weight of acenaphthylene (melting point = 92°C; manufactured by Tokyo Kasei Kogyo Co., Ltd.) were placed in a mortar, and the mixture was mixed for 15 minutes. Thereby, a precursor polymer of a silicon-containing carbon-based composite material was prepared.

Preparation of a silicon-containing carbon-based composite material

The aforementioned precursor polymer, in an amount of 4.36 parts by weight, was used, and the obtained carbonaceous material was classified with a #300 mesh. In addition, the same processes as described in Example 3 were carried out, with the exception of using 0.99 parts by weight of the carbonaceous material for the final baking. An X-ray diffraction pattern of the obtained silicon-containing carbon-based composite material is shown in Fig. 32. In addition, the results obtained from an adsorption isotherm of nitrogen and a Raman spectrum are shown in Table 2.

Preparation of a negative polar body

The same processes as described in Example 1 were carried out, with the exception of adding 9.54 parts by weight of ketjen black and 9.18 parts by weight of polyvinylidene fluoride to 107.65 parts by weight of the aforementioned silicon-containing carbon-based composite material.

Preparation and evaluation of a lithium ion secondary battery

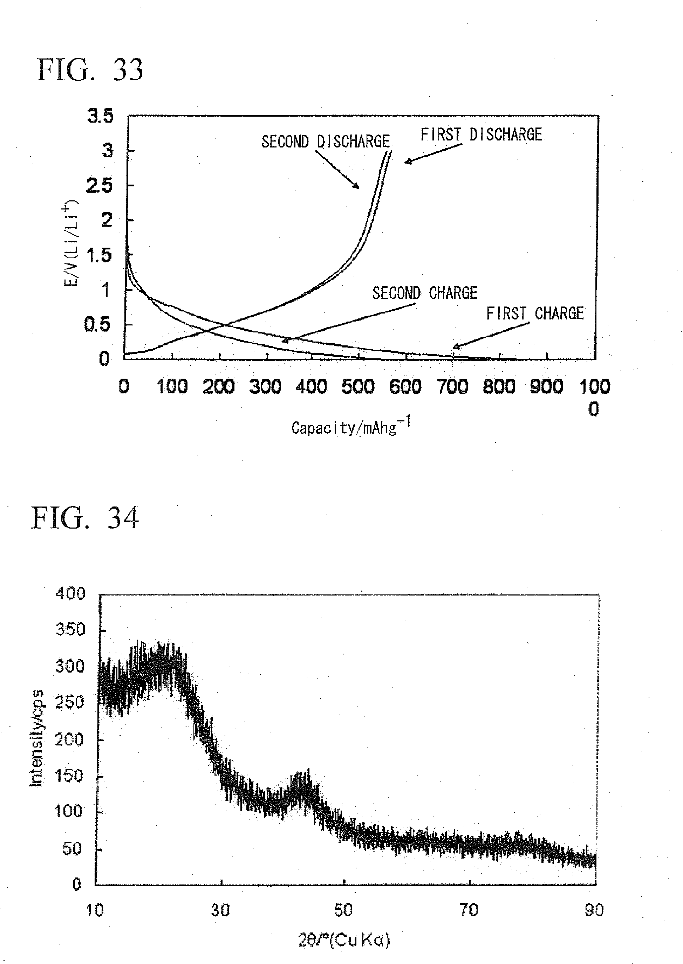

A lithium ion secondary battery having the structure shown in Fig. 2 was prepared. The same processes as described in Example 4 were carried out, with the exception of carrying out the measurement of constant current charge and discharge with a current value of 0.19 mA. The characteristics of the battery of Example 13 are shown in Table 2 and Fig. 33.

Example 14

Preparation of a precursor polymer of a silicon-containing carbon-based composite material

3.50 parts by weight of a polysilane (Mw = $3.05 \times 10^3$) represented by the following average unit formula:

$$(PhMeSi)_{0.50}(Ph_2Si)_{0.30}(MeSi)_{0.20}$$

and 3.50 parts by weight of acenaphthylene (melting point = 92°C; manufactured by Tokyo Kasei Kogyo Co., Ltd.) were placed in a mortar, and the mixture was mixed for 15 minutes. Thereby, a precursor polymer of a silicon-containing carbon-based composite material was prepared.

Preparation of a silicon-containing carbon-based composite material

The aforementioned precursor polymer, in an amount of 4.45 parts by weight, was used, and the obtained carbonaceous material was classified with a #300 mesh. In addition, the same processes as described in Example 3 were carried out, with the exception of using 1.03 parts by weight of the carbonaceous material for the final baking. An X-ray diffraction pattern of the obtained silicon-containing carbon-based composite material is shown in Fig. 34. In addition, the results obtained from an adsorption isotherm of nitrogen and a Raman spectrum are shown in Table 2.

Preparation of a negative polar body

The same processes as described in Example 1 were carried out, with the exception of adding 9.66 parts by weight of ketjen black and 9.62 parts by weight of polyvinylidene fluoride to 108.69 parts by weight of the aforementioned silicon-containing carbon-based composite material.

Preparation and evaluation of a lithium ion secondary battery

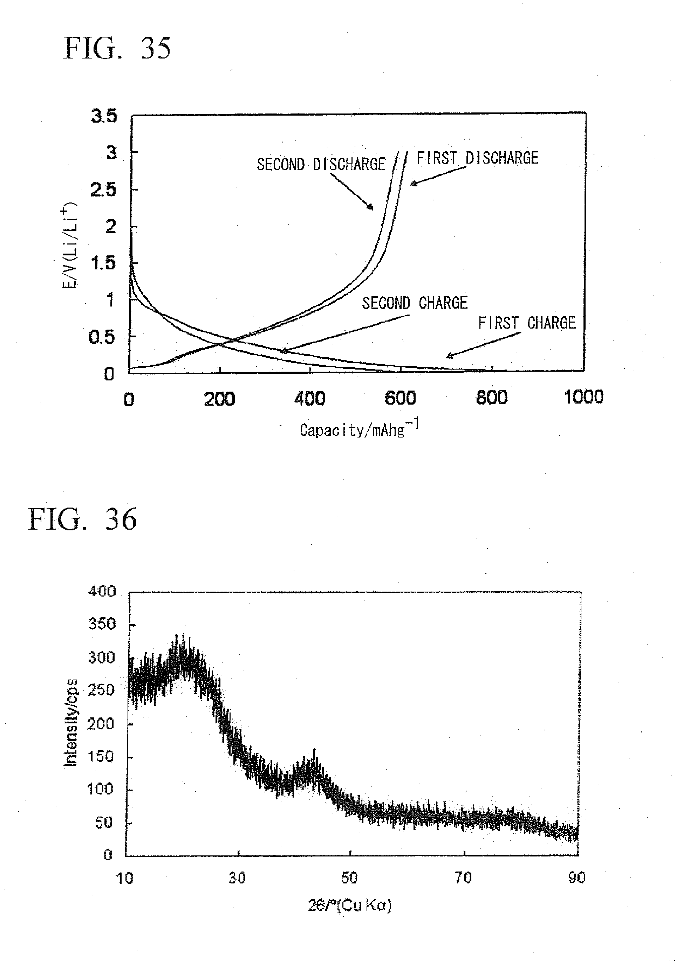

A lithium ion secondary battery having the structure shown in Fig. 2 was prepared. The same processes as described in Example 4 were carried out, with the exception of carrying out the measurement of constant current charge and discharge with a current value of 0.19 mA. The characteristics of the battery of Example 14 are shown in Table 2 and Fig. 35.

Example 15

Preparation of a precursor polymer of a silicon-containing carbon-based composite material

3.50 parts by weight of a polysilane (Mw = $2.16 \times 10^4$) represented by the following average unit formula:

$$(PhMeSi)_{0.85}(MeSi)_{0.15}$$

and 3.50 parts by weight of acenaphthylene (melting point = 92°C; manufactured by Tokyo Kasei Kogyo Co., Ltd.) were placed in a mortar, and the mixture was mixed for 15 minutes. Thereby, a precursor polymer of a silicon-containing carbon-based composite material was prepared.

Preparation of a silicon-containing carbon-based composite material

The aforementioned precursor polymer, in an amount of 4.35 parts by weight, was used, and the obtained carbonaceous material was classified with a #300 mesh. In addition, the same processes as described in Example 3 were carried out, with the exception of using 1.03 parts by weight of the carbonaceous material for the final baking. An X-ray diffraction pattern of the obtained silicon-containing carbon-based composite material is shown in Fig. 36. In addition, the results obtained from an adsorption isotherm of nitrogen and a Raman spectrum are shown in Table 2.

Preparation of a negative polar body

The same processes as described in Example 1 were carried out, with the exception of adding 9.52 parts by weight of ketjen black and 9.22 parts by weight of polyvinylidene fluoride to 107.20 parts by weight of the aforementioned silicon-containing carbon-based composite material.

Preparation and evaluation of a lithium ion secondary battery

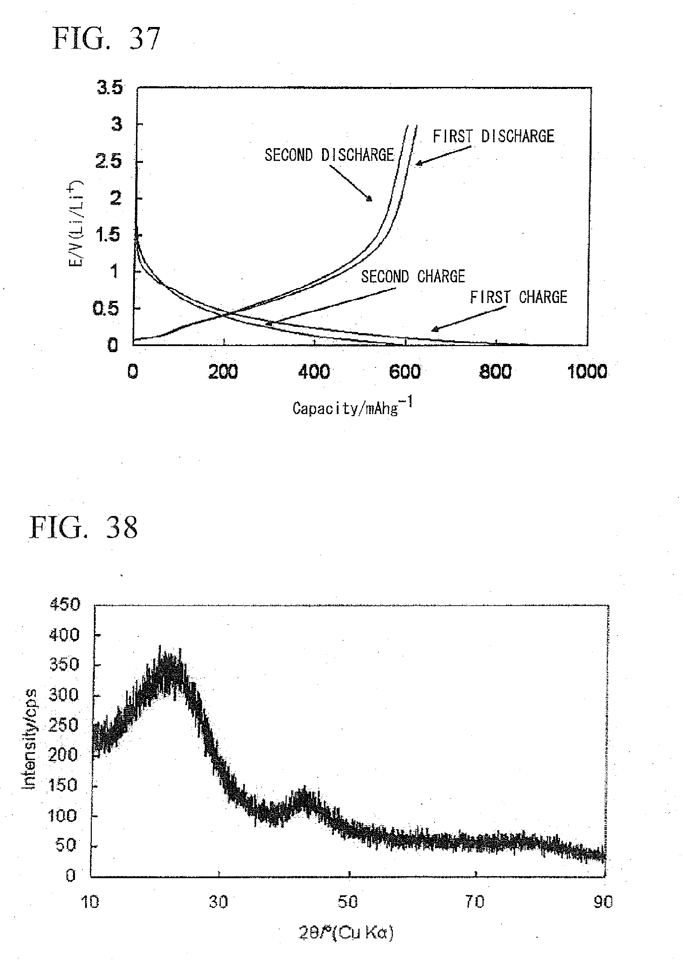

A lithium ion secondary battery having the structure shown in Fig. 2 was prepared. The same processes as described in Example 4 were carried out, with the exception of carrying out the measurement of constant current charge and discharge with a current value of 0.15 mA. The characteristics of the battery of Example 15 are shown in Table 2 and Fig. 37.

Example 16

Preparation of a precursor polymer of a silicon-containing carbon-based composite material

1.25 parts by weight of a polysilane (Mw = $15.4 \times 10^3$) represented by the following average unit formula:

$$(PhMeSi)_{0.6}(Ph_2Si)_{0.2}(MeSi)_{0.2}$$

1.25 parts by weight of a phenyl resin represented by the average unit formula:

$$(PhSiO_{3/2})_n$$

wherein n is a positive number so as to have a Mw of 1,500 (217 FLAKE resin, manufactured by Dow Corning Toray Co., Ltd.; Mw = 1,500), and 2.52 parts by weight of acenaphthylene (melting point = 92°C; manufactured by Wako Pure Chemical Industries, Ltd.) were placed in a mortar, and the mixture was mixed for 15 minutes. Thereby, a precursor polymer of a silicon-containing carbon-based composite material was prepared.

Preparation of a silicon-containing carbon-based composite material

The aforementioned precursor polymer, in an amount of 4.51 parts by weight, was used, and the obtained carbonaceous material was classified with a #300 mesh. In addition, the same processes as described in Example 3 were carried out, with the exception of using 1.00 parts by weight of the carbonaceous material for the final baking. An X-ray diffraction pattern of the obtained silicon-containing carbon-based composite material is shown in Fig. 38. In addition, the results obtained from an adsorption isotherm of nitrogen and a Raman spectrum are shown in Table 2.

Preparation of a negative polar body

The same processes as described in Example 1 were carried out, with the exception of adding 9.75 parts by weight of ketjen black and 9.49 parts by weight of polyvinylidene fluoride to 107.98 parts by weight of the aforementioned silicon-containing carbon-based composite material.

Preparation and evaluation of a lithium ion secondary battery

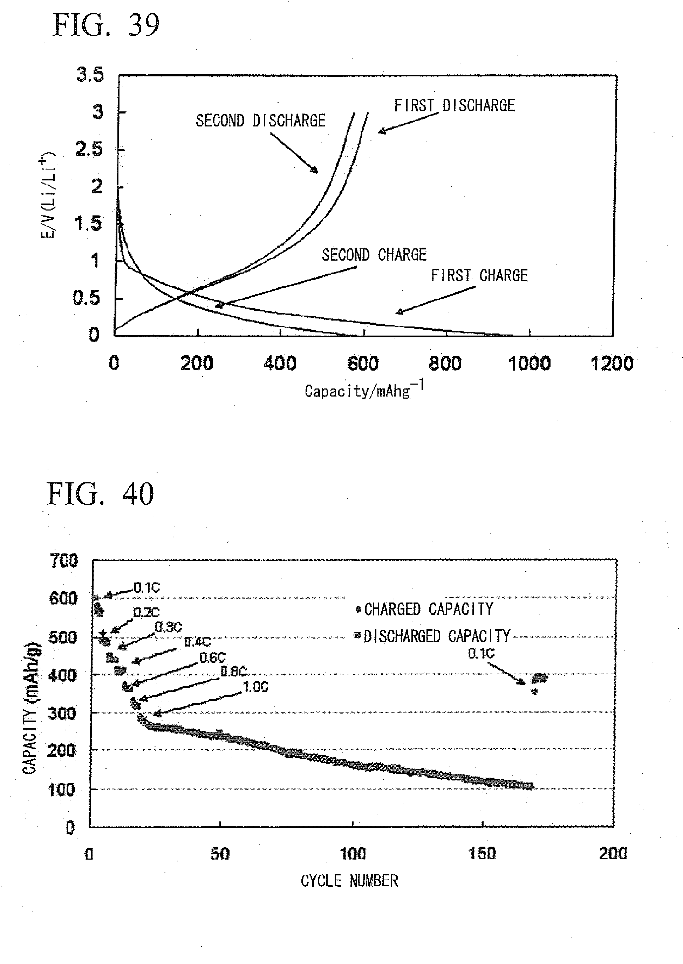

A lithium ion secondary battery having the structure shown in Fig. 2 was prepared. The same evaluation as described in Example 4 was carried out, with the exception of carrying out the measurement of constant current charge and discharge with a current value of 0.19 mA. In addition, the capacity maintenance index was calculated from the capacity obtained under the conditions of cycle characteristics, in which three cycles were carried out with a current value of 0.19 mA, subsequently three cycles were carried out independently with current values twice, 3 times, 4 times, 6 times, 8 times, 10 times, and 20 times higher, subsequently 150 cycles were carried out with a current value 10 times higher, and subsequently, five cycles were carried out after the current value was returned to 0.19 mA (total number of cycles = 173). The characteristics of the battery of Example 16 are shown in Table 2, Fig. 39 and Fig. 40.

Example 17

Preparation of a precursor polymer of a silicon-containing carbon-based composite material

2.50 parts by weight of a phenyl resin represented by the following average unit formula:

$$(PhSiO_{3/2})_n$$

wherein n is a positive number so as to have a Mw of 1,500 (217 FLAKE resin, manufactured by Dow Corning Toray Co., Ltd.; Mw = 1,500), and 2.51 parts by weight of acenaphthylene (melting point = 92°C; manufactured by Wako Pure Chemical Industries, Ltd.) were placed in a mortar, and the mixture was mixed for 15 minutes. Thereby, a precursor polymer of a silicon-containing carbon-based composite material was prepared.

Preparation of a silicon-containing carbon-based composite material

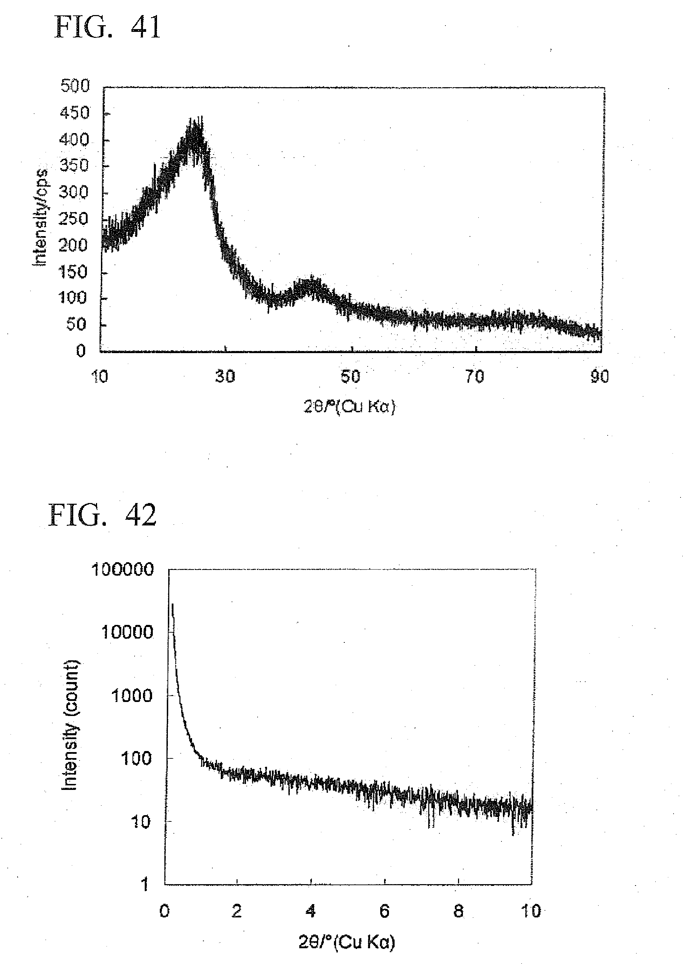

The aforementioned precursor polymer, in an amount of 3.72 parts by weight, was used, and the obtained carbonaceous material was classified with a #300 mesh. In addition, the same processes as described in Example 3 were carried out, with the exception of using 0.98 parts by weight of the carbonaceous material for the final baking. An X-ray diffraction pattern, a small-angle X-ray scattering spectrum, and a vacancy size distribution of the obtained silicon-containing carbon-based composite material are shown in Fig. 41, Fig. 42, and Fig. 43, respectively. In addition, the results obtained from an adsorption isotherm of nitrogen, a small-angle X-ray scattering spectrum and a Raman spectrum are shown in Table 2.

Preparation of a negative polar body

The same processes as described in Example 1 were carried out, with the exception of adding 9.78 parts by weight of ketjen black and 9.66 parts by weight of polyvinylidene fluoride to 108.64 parts by weight of the aforementioned silicon-containing carbon-based composite material.

Preparation and evaluation of a lithium ion secondary battery

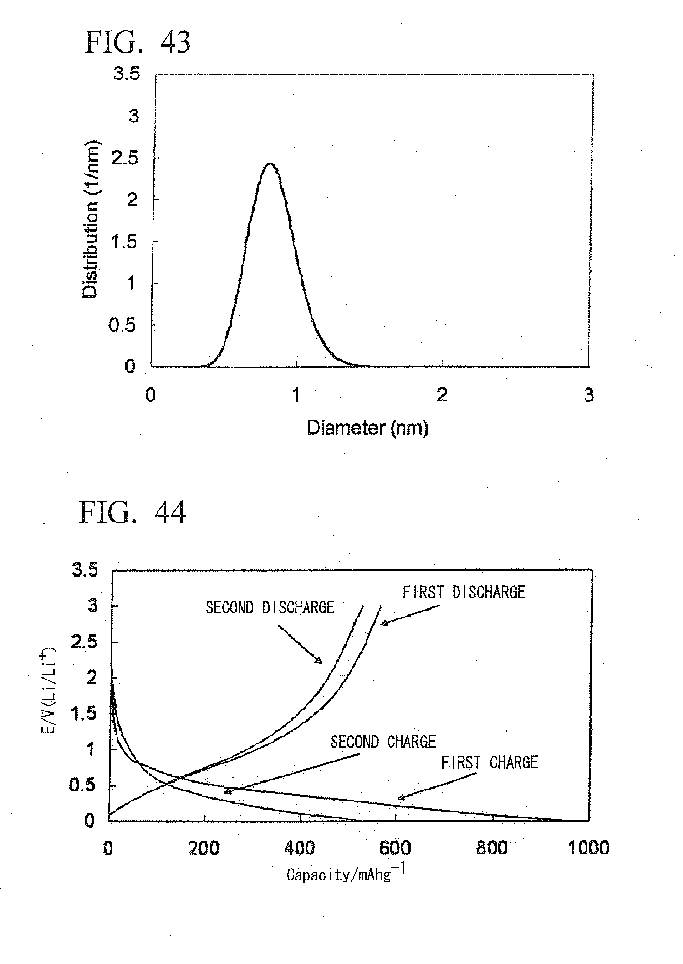

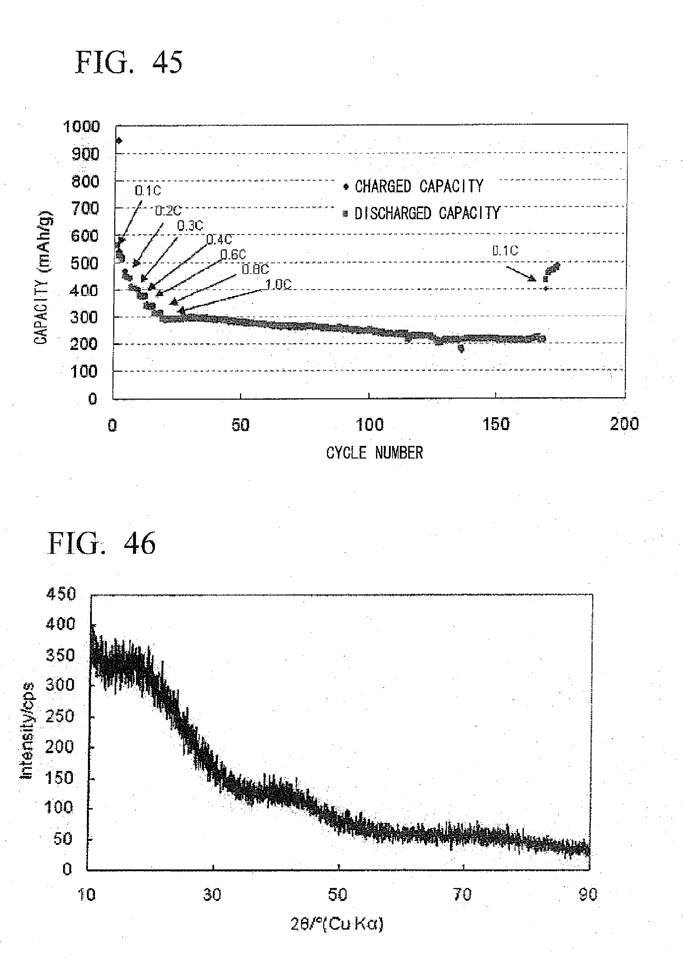

A lithium ion secondary battery having the structure shown in Fig. 2 was prepared. The same processes as described in Example 4 were carried out, with the exception of carrying out the measurement of constant current charge and discharge with a current value of 0.11 mA. In addition, a capacity maintenance index was calculated from the capacity obtained under the conditions of cycle characteristics, in which three cycles were carried out with a current value of 0.11 mA, subsequently three cycles were carried out independently with current values twice, 3 times, 4 times, 6 times, and 8 times higher, subsequently 150 cycles were carried out with a current value 10 times higher, and subsequently, five cycles were carried out after the current value was returned to 0.11 mA (total number of cycles = 173). The characteristics of the battery of Example 17 are shown in Table 2, Fig. 44 and Fig. 45.

Example 18

Preparation of a precursor polymer of a silicon-containing carbon-based composite material

The precursor polymer prepared in Example 5 was used.

Preparation of a silicon-containing carbon-based composite material

The carbonaceous material obtained after classification in Example 7 was used. The same processes as described in Example 3 were carried out, with the exception of using 0.97 parts by weight of the carbonaceous material for the final baking at 700°C. An X-ray diffraction pattern of the obtained silicon-containing carbon-based composite material is shown in Fig. 46. It was difficult to measure an adsorption isotherm of nitrogen of the obtained silicon-containing carbon-based composite material. In addition, the intensity of two bands in Raman spectrum which were characteristic to the carbon material was very weak, and therefore, an La value could not be calculated.

Preparation of a negative polar body

The same processes as described in Example 1 were carried out, with the exception of adding 9.52 parts by weight of ketjen black and 9.41 parts by weight of polyvinylidene fluoride to 106.54 parts by weight of the aforementioned silicon-containing carbon-based composite material.

Preparation and evaluation of a lithium ion secondary battery

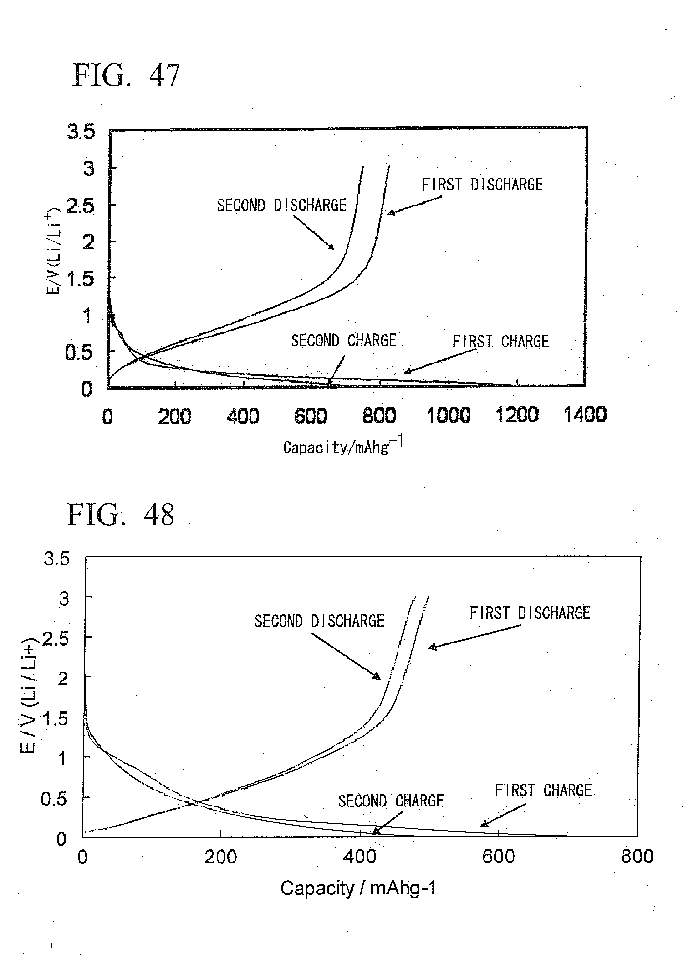

A lithium ion secondary battery having the structure shown in Fig. 2 was prepared. The same processes as described in Example 4 were carried out, with the exception of carrying out the measurement of constant current charge and discharge with a current value of 0.16 mA. The characteristics of the battery of Example 18 are shown in Table 2 and Fig. 47.

Example 19

Preparation of a precursor polymer of a silicon-containing carbon-based composite material

0.5 parts by weight of a polysilane (Mw = $2.16 \times 10^4$) represented by the following average unit formula:

$$(Ph_2Si)_{0.85}(PhSi)_{0.15}$$

0.5 parts by weight of coal tar pitch (softening point = 143°C; High pellet, manufactured by Osaka Kasei Co., Ltd.), 0.01 parts by weight of 2,5-dimethyl-2,5-di(t-butylperoxy)hexane, and 10 parts by weight of tetrahydrofuran with a special grade were placed in a two-necked flask equipped with a stirrer. The mixture was stirred for 30 minutes at normal pressure. Subsequently, tetrahydrofuran was removed by distillation under reduced pressure. Subsequently, a condenser and a thermometer were put into the flask. A heat treatment for 30 minutes at 200°C was carried out in a nitrogen flow. Thereby, a precursor polymer of a silicon-containing carbon-based composite material was prepared.

Preparation of a silicon-containing carbon-based composite material

The same processes as described in Example 1 were carried out, with the exception of using 0.47 g of the aforementioned precursor polymer. The results obtained from an adsorption isotherm of nitrogen and a Raman spectrum of the obtained silicon-containing carbon-based composite material are shown in Table 2.

Preparation of a negative polar body

The same processes as described in Example 1 were carried out, with the exception of adding 7.8 parts by weight of ketjen black and 10.12 parts by weight of polyvinylidene fluoride to 100.83 parts by weight of the aforementioned silicon-containing carbon-based composite material.

Preparation and evaluation of a lithium ion secondary battery

A lithium ion secondary battery having the structure shown in Fig. 2 was prepared. The same evaluation as described in Example 4 was carried out, with the exception of carrying out the measurement of constant current charge and discharge with a current value of 0.14 mA. The characteristics of the battery of Example 19 are shown in Table 2 and Fig. 48.

Example 20

Preparation of a precursor polymer of a silicon-containing carbon-based composite material

The precursor polymer prepared in Example 11 was used.

Preparation of a silicon-containing carbon-based composite material

The carbonaceous material obtained in Example 11 was classified with a #500 mesh and then with a #2,000 mesh, and the classified carbonaceous material was used. In addition, the same processes as described in Example 3 were carried out, with the exception of using 0.86 parts by weight of the carbonaceous material for the final baking. The results obtained from an adsorption isotherm of nitrogen and a Raman spectrum of the silicon-containing carbon-based composite material are shown in Table 2.

Preparation of a negative polar body

The same processes as described in Example 1 were carried out, with the exception of adding 11.74 parts by weight of ketjen black and 24.79 parts by weight of polyvinylidene fluoride to 201.89 parts by weight of the aforementioned silicon-containing carbon-based composite material.

Preparation and evaluation of a lithium ion secondary battery

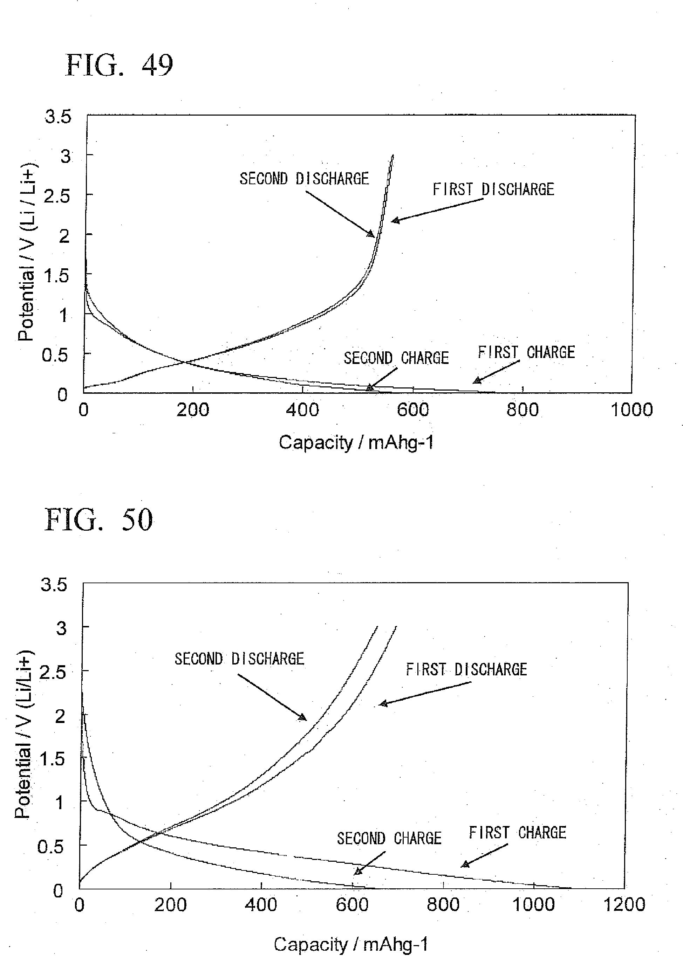

A lithium ion secondary battery having the structure shown in Fig. 2 was prepared. The same evaluation as described in Example 4 was carried out, with the exception of carrying out the measurement of constant current charge and discharge with a current value of 0.28 mA. The characteristics of the battery of Example 20 are shown in Table 2 and Fig. 49.

Example 21

Preparation of a precursor polymer of a silicon-containing carbon-based composite material

The same processes as described in Example 3 were carried out, with the exception of using 5.01 parts by weight of a phenyl resin represented by the following average unit formula:

$$(PhSiO_{3/2})_n$$

wherein n is a positive number so as to have a Mw of 1,500 (217FLAKE resin, manufactured by Dow Corning Toray Co., Ltd.; Mw = 1,500), 5.02 parts by weight of a polysilane represented by the following average unit formula: $(Ph_2Si)_{0.85}(PhSi)_{0.15}$ (Mw = $1.03 \times 10^3$), 10.05 parts by weight of polystyrene beads manufactured by Wako Pure Chemical Industries, Ltd. (softening point = 240°C; an average degree of polymerization = 2,000), and 65 parts by weight of toluene with a special grade, manufactured by Wako Pure Chemical Industries, Ltd.

Preparation of a silicon-containing carbon-based composite material

The aforementioned precursor polymer, in an amount of 3.39 parts by weight, was used, and the obtained carbonaceous material was classified with a #300 mesh. In addition, the same processes as described in Example 3 were carried out, with the exception of using 0.94 parts by weight of the carbonaceous material for the final baking. The results obtained from an adsorption isotherm of nitrogen and a Raman spectrum of the obtained silicon-containing carbon-based composite material are shown in Table 2.

Preparation of a negative polar body

The same processes as described in Example 1 were carried out, with the exception of adding 12.45 parts by weight of ketjen black and 12.24 parts by weight of polyvinylidene fluoride to 138.8 parts by weight of the aforementioned silicon-containing carbon-based composite material.

Preparation and evaluation of a lithium ion secondary battery

A lithium ion secondary battery having the structure shown in Fig. 2 was prepared. The same evaluation as described in Example 4 was carried out, with the exception of carrying out the measurement of constant current charge and discharge with a current value of 0.11 mA. The characteristics of the battery of Example 21 are shown in Table 2 and Fig. 50.

Example 22

Preparation of a precursor polymer of a silicon-containing carbon-based composite material

The same processes as described in Example 3 were carried out, with the exception of using 8.01 parts by weight of a phenyl resin represented by the following average unit formula:

$$(PhSiO_{3/2})_n$$

wherein n is a positive number so as to have a Mw of 1,500 (217FLAKE resin, manufactured by Dow Corning Toray Co., Ltd.; Mw = 1,500), 1.98 parts by weight of a polysilane represented by the following average unit formula: $(Ph_2Si)_{0.85}(PhSi)_{0.15}$ (Mw = $1.03 \times 10^3$), 10.01 parts by weight of polystyrene beads manufactured by Wako Pure Chemical Industries, Ltd., (softening point = 240°C; an average degree of polymerization = 2,000), and 66.1 parts by weight of toluene with a special grade, manufactured by Wako Pure Chemical Industries, Ltd.

Preparation of a silicon-containing carbon-based composite material

The aforementioned precursor polymer, in an amount of 2.28 parts by weight, was used, and the obtained carbonaceous material was classified with a #300 mesh. In addition, the same processes as described in Example 3 were carried out, with the exception of using 0.92 parts by weight of the carbonaceous material for the final baking. The results obtained from an adsorption isotherm of nitrogen and a Raman spectrum of the obtained silicon-containing carbon-based composite material are shown in Table 2.

Preparation of a negative polar body

The same processes as described in Example 1 were carried out, with the exception of adding 12.37 parts by weight of ketjen black and 12 parts by weight of polyvinylidene fluoride to 136 parts by weight of the aforementioned silicon-containing carbon-based composite material.

Preparation and evaluation of a lithium ion secondary battery

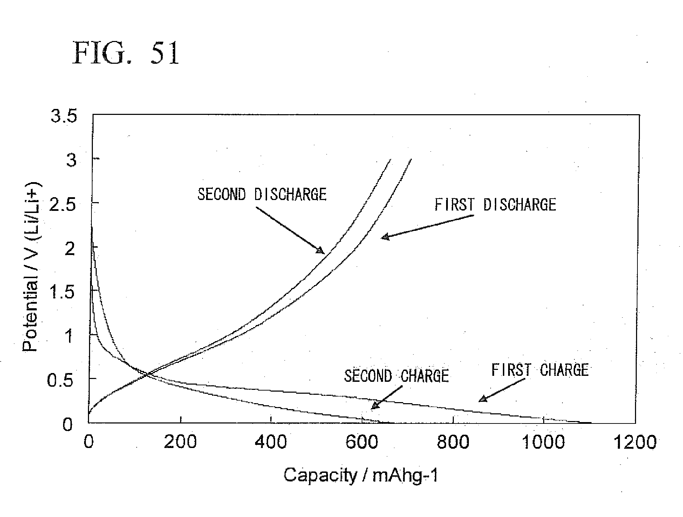

A lithium ion secondary battery having the structure shown in Fig. 2 was prepared. The same evaluation as described in Example 4 was carried out, with the exception of carrying out the measurement of constant current charge and discharge with a current value of 0.18 mA. The characteristics of the battery of Example 22 are shown in Table 2 and Fig. 51.

Comparative Example 1

Preparation of a negative polar body

22.12 parts by weight of ketjen black was added to 250.56 parts by weight of artificial graphite (PAG, manufactured by Nippon Graphite Industries Ltd.). The mixture was mixed for 15 minutes in a mortar. Subsequently, 24.20 parts by weight of polyvinylidene fluoride was added thereto. In addition, the mixture was further mixed for 15 minutes. Subsequently, N-methyl-2-pyrrolidone was added thereto as a solvent, and thereby, a slurry was formed. Subsequently, the slurry was applied on a roll of a copper foil by means of a doctor blade method, so that an electrode having a thickness of about 250 μm was prepared. The electrode obtained above was subjected to drying under vacuum for not less than 12 hours at 110°C. Thereby, a negative polar body having a thickness of about 50 μm was prepared.

Preparation and evaluation of a lithium ion secondary battery

A lithium ion secondary battery having the structure shown in Fig. 1 was prepared. The same processes as described in Example 1 were carried out, with the exception of carrying out the measurement of constant current charge and discharge with a current value of 0.21 mA. The characteristics of the battery of Comparative Example 1 are shown in Table 3.

Comparative Example 2

Preparation of a negative polar body

22.94 parts by weight of ketjen black was added to 250.07 parts by weight of artificial graphite (PAG, manufactured by Nippon Graphite Industries Ltd.). The mixture was mixed for 15 minutes in a mortar. Subsequently, 23.77 parts by weight of polyvinylidene fluoride was added thereto. The mixture was further mixed for 15 minutes. Subsequently, N-methyl-2-pyrrolidone was added thereto as a solvent, and thereby, a slurry was formed. Subsequently, the slurry was applied on a roll of a copper foil by means of a doctor blade method, so that an electrode having a thickness of about 250 μm was prepared. The electrode obtained above was subjected to drying under vacuum for not less than 12 hours at 110°C. Thereby, a negative polar body having a thickness of about 50 μm was prepared.

Preparation and evaluation of a lithium ion secondary battery

A lithium ion secondary battery having the structure shown in Fig. 2 was prepared. The same processes as described in Example 1 were carried out, with the exception of carrying out the measurement of constant current charge and discharge with a current value of 0.17 mA. The characteristics of the battery of Comparative Example 2 are shown in Table 3.

Comparative Example 3

Preparation of a precursor polymer of a carbon-based material

A phenol aralkyl resin (MfLEXXLC-3L, manufactured by Mitsui Chemicals, Inc.), in an amount of 35.51 parts by weight, was used.

Preparation of a carbon-based material

35.51 parts by weight of the aforementioned precursor polymer was placed in a boat made of alumina with an SSA-S grade. The aforementioned boat was set at the central part of a muffle furnace. Subsequently, the inner circumstance of said furnace was maintained for 10 minutes under reduced pressure, and then returned to normal pressure with high purity argon (99.99%). This operation was repeated once in total. Subsequently, while high purity nitrogen was being supplied thereto with a flow rate of 2 L/min, the temperature was increased at a rate of 2°C/min, and baking was carried out for 2 hours at 600°C. Subsequently, the obtained carbonaceous material was pulverized by means of a ball mill made of zirconia for about 3 hours in air, followed by classifying by means of a sieve made of stainless steel with a #300 mesh. Subsequently, 5.41 parts by weight of the aforementioned carbonaceous material was placed in a boat made of alumina with an SSA-S grade. The aforementioned boat was set in a carbon container at the central part of a controllable atmospheric furnace. Subsequently, the inner circumstance of the aforementioned controllable atmospheric furnace was maintained for 10 minutes, and subsequently, was returned to normal pressure with nitrogen with a high purity (99.99%). This operation was repeated once in total. Subsequently, while nitrogen with a high purity was being provided at a flow rate of 100 ml/min, the temperature was increased at a rate of 5°C/min. Thereby, baking was carried out for one hour at 1,000°C. The results obtained from an adsorption isotherm of nitrogen and a Raman spectrum of the obtained carbonaceous material are shown in Table 2.

Preparation of a negative polar body

The same processes as described in Example 1 were carried out, with the exception of adding 12.31 parts by weight of ketjen black and 24.31 parts by weight of polyvinylidene fluoride to 202.9 parts by weight of the aforementioned carbonaceous material.

Preparation and evaluation of a lithium ion secondary battery

A lithium ion secondary battery having the structure shown in Fig. 2 was prepared. The same evaluation as described in Example 4 was carried out, with the exception of carrying out the measurement of constant current charge and discharge with a current value of 0.12 mA. The characteristics of the battery of Comparative Example 3 are shown in Table 2.

Table 1

| Physical property Example | Elemental analysis (wt%) | | | | | |
|---|---|---|---|---|---|---|
| | C | H | N | O | Si | Total |
| Example 1 | 65.4 | 1.30 | 0.04 | 10.8 | 17.0 | 94.54 |
| Example 2 | 82.5 | 1.28 | 0.78 | 8.29 | 8.00 | 100.85 |

Table 2

| Physical properties / Example | IUPAC TYPE | BET specific surface area (m²/g) | Pore capacity (cm³/g) | Average fine-pore size (nm) | La (nm) | Reversible capacity (mAh/g) | Initial coulomb efficiency (%) | Average voltage at the time of first discharg-ing (V) | Capacity maintenance index after cycles (%) 10 | 20 | 30 | 40 | 50 |
|---|---|---|---|---|---|---|---|---|---|---|---|---|---|
| Example 1 | I | 17 | | | | 556 | 61 | 0.77 | 104 | 118 | 121 | 118 | 107 |
| Example 2 | I | 10 | | | 1.4 | 444 | 56 | 0.94 | 94 | 99 | 108 | 111 | 114 |
| Example 3 | I | 13.6 | $4.5 \times 10^{-3}$ | 1.18 | 1.1 | 645 | 68 | 0.77 | | | | | |
| Example 4 | I | 13.6 | $4.5 \times 10^{-3}$ | 1.18 | 1.1 | 623 | 71 | 0.69 | 97 | 97 | 98 | 98 | 99 |
| Example 5 | I | 22.5 | $7.9 \times 10^{-3}$ | | 1.2 | 609 | 71 | 0.74 | 96 (after 179 cycles) | | | | |
| Example 6 | I | 12.3 | $3.8 \times 10^{-3}$ | | 1.0 | 594 | 73 | 0.73 | 94 | 92 | | | |
| Example 7 | I | 11 | $4.0 \times 10^{-3}$ | | 1.2 | 641 | 71 | 0.67 | 100 (after 181 cycles) | | | | |
| Example 8 | I | 8.5 | $3.5 \times 10^{-3}$ | | 1.1 | 582 | 64 | 0.82 | | | | | |
| Example 9 | - | - | - | | 1.0 | 604 | 62 | 0.82 | | | | | |
| Example 10 | I | 12.1 | $3.6 \times 10^{-3}$ | | 1.0 | 632 | 71 | 0.72 | 97 (after 189 cycles) | | | | |
| Example 11 | I | 7.2 | $2.4 \times 10^{-3}$ | | 1.0 | 581 | 69 | 0.71 | 98 (after 79 cycles) | | | | |
| Example 12 | I | - | - | | 1.3 | 635 | 71 | 0.68 | | | | | |
| Example 13 | I | 27.4 | $9.8 \times 10^{-3}$ | | 1.1 | 561 | 65 | 0.81 | | | | | |
| Example 14 | I | 14.6 | $4.7 \times 10^{-3}$ | | 1.1 | 610 | 70 | 0.74 | | | | | |
| Example 15 | I | 15.1 | $4.9 \times 10^{-3}$ | | 1.1 | 619 | 69 | 0.76 | | | | | |
| Example 16 | I | 20.6 | $7.5 \times 10^{-3}$ | | 1.2 | 600 | 63 | 0.99 | 65 (after 173 cycles) | | | | |
| Example 17 | I | 17.8 | $6.8 \times 10^{-3}$ | 0.83 | 1.4 | 563 | 60 | 1.08 | 85 (after 173 cycles) | | | | |
| Example 18 | - | - | - | | | 822 | 64 | 0.93 | | | | | |
| Example 19 | I | 38.1 | $1.1 \times 10^{-2}$ | | 1.1 | 495 | 69 | 0.8 | 94 | | | | |
| Example 20 | I | 4.1 | $7.1 \times 10^{-4}$ | | 1.0 | 559 | 73 | 0.7 | 99 | 100 | | | |
| Example 21 | I | 22.5 | $8.1 \times 10^{-3}$ | | 1.3 | 689 | 63 | 1.19 | 86 | 85 | 81 | 81 | 81 |
| Example 22 | I | 12 | $4.7 \times 10^{-3}$ | | 1.3 | 701 | 63 | 1.21 | 85 | 82 | 78 | 78 | 74 |
| Comparative Example 3 | I | 30.4 | $1.0 \times 10^{-2}$ | | 2.7 | 289 | 67 | 0.71 | 93 | 97 | 103 | | |

Table 3

| Physical property<br><br>Example | Reversible capacity (mAh/g) | Initial coulomb efficiency (%) | Average voltage at the time of first discharging (V) |
|---|---|---|---|
| Comparative Example 1 | 341 | 76 | 0.36 |
| Comparative Example2 | 354 | 72 | 0.38 |

INDUSTRIAL APPLICABILITY

The silicon-containing carbon-based composite materials of the present invention can be suitably used as electrode materials of batteries, and in particularly, can be used as a negative electrode of a lithium ion secondary battery. The lithium ion secondary batteries equipped with electrodes, and in particular, a negative electrode, formed from the silicon-containing carbon-based composite materials of the present invention exhibit a superior reversible capacity and superior charge and discharge cycle characteristics, and have a reduced loss of potential at the time of discharging lithium.

**Claims**

1. A porous silicon-containing carbon-based composite material obtainable by carbonizing both (1) a silicon metal or a silicon-containing compound and (2) an organic compound containing no silicon atoms and having a softening point or a melting point, in an inert gas or in a vacuum at a temperature ranging from 300 to 1,500°C.

2. The composite material according to claim 1, wherein said softening point or melting point of said component (2) is 400°C or less.

3. The composite material according to claim 1, which is a particulate.

4. The composite material according to claim 3, wherein the particulate has a maximum particle size of not more than 100 $\mu$m.

5. The composite material according to claim 3, wherein the particulate has a BET specific surface area ranging from 0.5 m$^2$/g to 500 m$^2$/g.

6. The composite material according to claim 3, wherein a pore volume ranges from $1.0 \times 10^{-5}$ cm$^3$/g to 1 cm$^3$/g.

7. The composite material according to claim 3, an adsorption isotherm of nitrogen specified in IUPAC is classified in TYPE I.

8. An electrode comprising the composite material as recited in any one of claims 1 to 7.

9. A battery comprising the electrode as recited in claim 8.

10. The battery according to claim 9, which is a lithium ion secondary battery.

FIG. 1

FIG. 2

## FIG. 3

## FIG. 4

10 μm

## FIG. 5

## FIG. 6

## FIG. 7

10 μm

## FIG. 8

Capacity/mAhg⁻¹

## FIG. 9

## FIG. 10

FIG. 11

FIG. 12

FIG. 13

FIG. 14

## FIG. 15

## FIG. 16

## FIG. 17

## FIG. 18

## FIG. 19

## FIG. 20

FIG. 21

FIG. 22

FIG. 23

FIG. 24

FIG. 25

FIG. 26

## FIG. 27

## FIG. 28

## FIG. 29

## FIG. 30

FIG. 31

FIG. 32

## FIG. 33

## FIG. 34

## FIG. 35

## FIG. 36

## FIG. 37

## FIG. 38

FIG. 39

FIG. 40

FIG. 41

FIG. 42

FIG. 43

FIG. 44

FIG. 45

FIG. 46

## FIG. 47

## FIG. 48

FIG. 49

FIG. 50

FIG. 51

## INTERNATIONAL SEARCH REPORT

| | International application No. |
|---|---|
| | PCT/JP2007/075156 |

A. CLASSIFICATION OF SUBJECT MATTER
*H01M4/58*(2006.01)i, *C01B31/02*(2006.01)i, *H01G9/058*(2006.01)n

According to International Patent Classification (IPC) or to both national classification and IPC

B. FIELDS SEARCHED

Minimum documentation searched (classification system followed by classification symbols)
H01M4/58, C01B31/02, H01G9/058

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 98/024135 A (Kao Corp.),<br>04 June, 1998 (04.06.98),<br>Claims; page 5, line 9 to page 7, line 26<br>& JP 3202249 B          & EP 903797 A1<br>& US 6171725 B | 1-10 |
| X | JP 11-339796 A (Kao Corp.),<br>10 December, 1999 (10.12.99),<br>Claims; page 3, Par. Nos. [0016] to [0023]<br>(Family: none) | 1-10 |
| X | JP 2000-195506 A (Kao Corp.),<br>14 July, 2000 (14.07.00),<br>Claims; page 2, Par. No. [0009] to page 3,<br>Par. No. [0014]<br>(Family: none) | 1-10 |

| [X] Further documents are listed in the continuation of Box C. | [ ] See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>28 February, 2008 (28.02.08) | Date of mailing of the international search report<br>11 March, 2008 (11.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/075156 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2002-298842 A  (Sumitomo Bakelite Co., Ltd.),<br>11 October, 2002 (11.10.02),<br>Claims; page 2, Par. No. [0008] to page 4,<br>Par. No. [0015]<br>(Family: none) | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006356630 A
- JP 2002216751 A
- JP 2004146104 A
- JP H1097853 B
- JP H1074506 B
- JP 2004273377 A
- WO 9829476 A
- JP H04334551 B
- US 4312970 A
- US 4340619 A
- US 4395460 A
- US 4404153 A
- US 4482689 A
- US 4397828 A
- US 4540803 A
- US 4543344 A
- US 4835238 A
- US 4774312 A
- US 4929742 A
- US 4916200 A

### Non-patent literature cited in the description

- *J. Electrochem. Soc.,* 1995, vol. 142, 1041
- *J. Electrochem. Soc.,* 1996, vol. 143, 3482
- *Solid State Ionics,* 1999, vol. 122, 71
- *J. Electrochem. Soc.,* 1997, vol. 144, 2410
- *J. Am. Chem. Soc.,* 1988, vol. 110, 124
- *Macromolecules,* 1990, vol. 23, 3423
- *Macromolecules,* 1990, vol. 23, 4494
- *J. Chem. Soc., Chem. Commun.,* 1990, 1161
- *J. Chem. Soc., Chem. Commun.,* 1992, 897
- **Burns et al.** *J. Mater. Sci.,* 1987, vol. 22, 2609-2614
- **Noll.** Chemistry and Technology of Silicones. Academic Press, 1968